# EUROPEAN PATENT APPLICATION

(11) **EP 4 830 561 A1**
(43) Date of publication of application: **28.10.2026**
(21) Application number: 26168375.9
(22) Date of filing: 27.03.2026
(51) Int. Cl.: A43B 1/00, A43B 5/02, A43B 9/20, A43B 13/14, A43B 23/00, A43B 23/02, B33Y 10/00, B33Y 80/00

(54) **ADDITIVE MANUFACTURED SHOE AND CORRESPONDING METHOD**

(30) Priority: 28.03.2025 DE 102025112183
(71) Applicant: adidas AG, 91074 Herzogenaurach (DE)
(72) Inventor: ZHAO, Meng, 91074 Herzogenaurach (DE); CURET, Raphael, 91074 Herzogenaurach (DE); GORDON, Andrew, 91074 Herzogenaurach (DE); SCHAEFKE, Hannes, 91074 Herzogenaurach (DE); SLACK, James, 91074 Herzogenaurach (DE); TAYLOR, Alexander, 91074 Herzogenaurach (DE); KIM, Nolan, 91074 Herzogenaurach (DE); SMYSLOV, Aleksandr, 91074 Herzogenaurach (DE); FICK, Florian, 91074 Herzogenaurach (DE); DELGADO, Christian Arias, Portland, OR, 97217 (US)
(74) Representative: Bardehle Pagenberg Partnerschaft mbB Patentanwälte Rechtsanwälte

(57) **Abstract**

The present application relates to a shoe, preferably a football shoe, comprising an upper and a sole unit. Specifically, the upper is manufactured based on a first additive manufacturing method and the sole unit is manufactured based on a second additive manufacturing method. The second additive manufacturing method is different from the first additive manufacturing method.

## Description

### Field of the invention

The present invention relates to a shoe, preferably a football shoe, as well as a method for manufacturing a football shoe. Specifically, the football shoe comprises an upper and a sole unit, wherein the upper is manufactured based on a first additive manufacturing method, the sole unit is manufactured based on a second additive manufacturing method, and the second additive manufacturing method is different from the first additive manufacturing method.

### Technical background

Aiming to maximize the performance of an athlete is at the very heart of the development and evolution of sporting goods. This especially applies to sport shoes, e.g., football and/or soccer shoes, where the performance of the athlete crucially depends on the performance of the shoe. Therefore, a lot of effort has been made to optimize the performance of sport shoes, particularly football and/or soccer shoes.

However, whereas such shoes, e.g., football and/or soccer shoes, are typically manufactured by mass production, each athlete has his/her own individual needs, which are based on the individual physique and the individual preferences of each athlete. For example, ensuring a perfect fit of the shoe for athletes due to variations in the individual foot can typically not be addressed by mass production, thus prohibiting a performance maximization of the athlete.

Therefore, there is a need for an improved shoe, e.g., football and/or soccer shoe, addressing at least some of the above-described disadvantages of the prior art and further improving other aspects.

### Summary of the invention

A first aspect relates to a shoe comprising an upper and a sole unit. Specifically, the upper is manufactured based on a first additive manufacturing method and the sole unit is manufactured based on a second additive manufacturing method. The second additive manufacturing method is different from the first additive manufacturing method.

Manufacturing the upper and the sole unit of a shoe by two different additive manufacturing methods allows for manufacturing the upper and the sole unit by an additive manufacturing method that fits best for the upper and the sole unit. Specifically, the upper of the shoe may has to fulfil other requirements than the sole unit of the shoe. In other words, the sole unit may be subject to different forces when wearing the shoe than the upper of the shoe. For example, manufacturing the upper and the sole unit of the shoe by two different additive manufacturing methods allows for manufacturing a stiffer and more durable sole unit while at the same time allowing for manufacturing a light-weight upper. Thus, using two different additive manufacturing methods enables to tailor-fit the upper and the sole unit more precisely to the needs of an athlete, thereby maximizing the grade of customization. Maximizing the grade of customization improves the performance of the athlete wearing the shoe.

Generally, the upper and the sole unit may be manufactured separately.

Manufacturing the upper and the sole unit separately may comprise that the manufacturing of the upper does not interfere with the manufacturing of the sole unit, e.g., two independent manufacturing processes. For example, the upper may be manufactured based on the first additive manufacturing method by a first manufacturing device and the sole unit may be manufactured based on the second additive manufacturing method by a second manufacturing device. In addition, or alternatively, manufacturing the upper and the sole unit separately may comprise manufacturing the upper and the sole unit sequentially. For example, the sole unit may be manufactured first and afterwards the upper may be manufactured.

Manufacturing the upper and the sole unit separately contributes to the optimization of the manufacturing method for the upper and the sole unit, e.g., choosing the manufacturing methods that fit best for the upper and the sole unit. Choosing the manufacturing methods that fit best for the upper and the sole unit maximizes the grade of customization and thereby optimizes the performance of the athlete.

In some embodiments, the first additive manufacturing method may comprise stereolithography. In addition, or alternatively, the second additive manufacturing method may comprise selective laser sintering.

For example, the upper may be manufactured based on stereolithography. For example, the upper may be manufactured based on Digital Light Synthesis (DLS). Being manufactured based on stereolithography may comprise that essentially the complete upper is manufactured by stereolithography. Essentially completely manufacturing the upper by stereolithography may comprise that at least 70%, preferably at least 80%, more preferably at least 85%, even more preferably at least 90%, most preferably at least 95% of the upper is manufactured by stereolithography. In some embodiments, the complete upper may be manufactured by stereolithography.

In addition, or alternatively, the sole unit may be manufactured based on selective laser sintering. Being manufactured based on selective laser sintering may comprise that essentially the complete sole unit is manufactured by selective laser sintering. Essentially completely manufacturing the sole unit by selective laser sintering may comprise that at least 70%, preferably at least 80%, more preferably at least 85%, even more preferably at least 90%, most preferably at least 95% of the sole unit is manufactured by selective laser sintering. In some embodiments, the complete sole unit may be manufactured by selective laser sintering.

Manufacturing the upper based on stereolithography and/or manufacturing the sole unit based on selective laser sintering contributes to the adaption of the manufacturing method to the particular (physical) requirements of the upper, e.g., breathability, flexibility and durability, and/or the sole unit, e.g., traction and stability. In addition, manufacturing the upper based on stereolithography and/or manufacturing the sole unit based on selective laser sintering contributes to a higher grade of customization, thereby improving the performance of an athlete.

In general, the first additive manufacturing method may be based on a first printing material comprising resin. In addition, or alternatively, the second additive manufacturing method may be based on a second printing material comprising a powder. For example, the powder may comprise polyamide.

Generally, the first and/or the second additive manufacturing method may be based on a printing material. A printing material may generally comprise expanded thermoplastic polyurethane (eTPU), expanded elastomeric polyurethane, a polyether block amide (PEBA), an expanded polyether block amide (ePEBA), a thermoplastic rubber (TPR), and a polyolefin, e.g., polyethylene (PE), polystyrene (PS), or polypropylene (PP), polyamides (nylon), or any combination thereof.

For example, the first additive manufacturing method may be based on a first printing material and/or the second additive manufacturing method may be based on a second printing material. Specifically, the upper may be manufactured based on a first printing material comprising resin. The resin may comprise an expandable resin, e.g., expandable under the application of heat. In some embodiments, the printing resin may comprise a chemical blowing agent. The chemical blowing agent may be configured such as to expand after printing upon application of heat. For example, the upper may be manufactured by stereolithography based on resin. In addition, or alternatively, the sole unit may be manufactured based on a second printing material comprising a powder. For example, the sole unit may be manufactured by selective laser sintering based on a powder. In some embodiments, the powder may comprise polyamide. Specifically, the powder may comprise polyamide 11.

Manufacturing the upper based on the first additive manufacturing method with a first printing material and manufacturing the sole unit based on the second additive manufacturing method with a second printing material contributes to the adaption of the manufacturing method to the particular (physical) requirements of the upper, e.g., breathability, flexibility and durability, and/or the sole unit, e.g., traction and stability. Specifically, a first printing material comprising resin contributes to the breathability, flexibility and durability of the upper and second printing material comprising a powder, e.g., polyamide, contributes to the traction and stability of the sole unit. Thus, manufacturing the upper based on the first additive manufacturing method with a first printing material and manufacturing the sole unit based on the second additive manufacturing method with a second printing material contributes to the maximization of the customization of the shoe, thereby optimizing the performance of the athlete.

Specifically, the resin may comprise moisture cured urethane. In addition, or alternatively, the resin may comprise expanded elastomeric polyurethane.

For example, the upper may be manufactured based on a resin comprising moisture cured urethane. In particular, the upper may be manufactured based on stereolithography with a resin comprising moisture cured urethane. In general, the moisture cured urethane, e.g., moisture cured polyurethane, may comprise at least one isocyanate group. Specifically, the at least one isocyanate group may be configured to react with water, e.g., moisture. In particular, the reaction may be such as to hardening the polyurethane. Generally, moisture cured urethane provides advantageous adhesion properties, e.g., bonding well to a variety of materials, comprising wood, metal, and plastics. Moreover, after curing, moisture cured urethane becomes highly resistant to water and humidity, making it ideal for coatings and adhesives in environments exposed to moisture, such as outdoor applications.

In addition, or alternatively, the upper may be manufactured based on a resin comprising expanded elastomeric polyurethane. In particular, the upper may be manufactured based on stereolithography with a resin comprising expanded elastomeric polyurethane.

Specifically, expanded elastomeric polyurethane is a printing material that can be expanded by the application of heat. Generally, a printing material that can be expanded by the application of heat allows for reducing a density, thereby minimizing the weight of the upper, leading to faster movements and improving the agility of the athlete. In addition, a resin comprising expanded elastomeric polyurethane may improve the haptic of the upper.

Generally, the upper may cover at least a part of a lower surface of the sole unit.

For example, a lower surface of the sole unit may comprise a surface of the sole unit that is configured to face a ground, e.g., a ground when an athlete is wearing the shoe. Specifically, the lower surface of the sole unit may comprise a surface of the sole unit that is configured to engage the ground. In some embodiments, the lower surface of the sole unit may comprise at least one stud. Generally, covering at least a part of a lower surface of the sole unit may comprise that at least a part of the upper contacts the at least part of the lower surface of the sole unit. In other words, an upper covering at least a part of a lower surface of the sole unit may comprise that at least a part of a surface of the upper faces the ground, e.g., when an athlete wears the shoe.

Specifically, the upper may cover the at least part of the lower surface of the sole unit such that the upper wraps around the at least part of the lower surface of the sole unit.

An upper wrapping around the at least part of the lower surface of the sole unit may comprise that the upper wraps around the at least part of the lower surface of the sole unit such as to form at least a part of an aperture of the shoe, e.g., the aperture of the shoe adapted to receive at least a part of a foot. In other words, the upper may wrap around the at least part of the lower surface of the sole unit such as to encompass and/or surround the at least part of the lower surface of the sole unit.

For example, the upper may cover at least 30% of the lower surface of the sole unit. Alternatively, the upper may cover at least 50% of the lower surface of the sole unit. upper may cover at least 70% of the lower surface of the sole unit. upper may cover at least 80% of the lower surface of the sole unit. upper may cover at least 90% of the lower surface of the sole unit.

Generally, the at least part of the lower surface of the sole unit that is covered by the upper may comprise a non-continuous part of the lower surface of the sole unit. For example, a non-continuous part of the lower surface of the sole unit may comprise that the at least part of the lower surface comprises at least one hole, e.g., a region that is not covered by the upper. In other words, the at least part of the lower surface that is covered by the upper may comprise a connected surface that is permeated by at least one hole, e.g., a hole adapted to receive a stud.

In general, the upper may be adapted to receive at least a part of the sole unit. For example, the upper may be adapted to receive the at least part of the sole unit such that the at least part of the sole unit is inserted into the upper.

For example, the sole unit may be inserted into the upper through an ankle opening of the upper. Specifically, the upper may receive the sole unit such as to wrap around at least a part of the lower surface of the sole unit. In other words, the sole unit may be sticked into the upper. For example, the upper may be separately manufactured from the sole unit, e.g., the upper may be manufactured based on the first additive manufacturing method and the sole unit may be manufactured based on the second additive manufacturing method, and (then) the sole unit may be inserted into the upper. Generally, the sole unit may be inserted into the upper such that a majority of the sole unit is arranged within the upper. Specifically, a majority of the sole unit may comprise that at least 60%, preferably at least 70%, more preferably at least 80&, most preferably at least 90% of the sole unit is arranged within the upper.

In some embodiments, at least a part of the upper and at least a part of the sole unit may be bonded.

For example, the at least part of the sole unit that is covered by the upper may be bonded with the upper. Specifically, the at least part of the upper and the at least part of the sole unit may be bonded when the sole unit is received by and/or inserted into the upper. In some embodiments, only a portion of the at least part of the sole unit that is covered by the upper may be bonded with the upper. In other words, the at least part of the sole unit that is covered by the upper may comprise a region that is not bonded to the upper.

Bonding the at least part of the upper with the at least part of the sole unit allows for increasing the stability of the shoe and ensures that the upper and the sole unit are fixed with respect to each other, e.g., avoiding that the sole unit shifts with respect to the upper when an athlete is wearing the shoe. In other words, bonding the at least part of the upper with the at least part of the sole unit guarantees that the shoe comprising the (separately) manufactured sole unit and upper appears as a one-piece shoe. Increasing the stability of the shoe improves the performance of an athlete wearing the shoe.

Specifically, the at least part of the sole unit may be bonded to the at least part of the upper. For example, the at least part of the sole unit may be bonded to an inner surface of the upper. In some examples, the sole unit may be cemented to the at least part of the upper. In other words, bonding at least part of the sole unit to the at least part of the upper may comprise cementing at least part of the sole unit to the at least part of the upper.

For example, the at least part of the sole unit that is covered by the upper may be bonded to the at least part of the upper. Specifically, the sole unit may be bonded to an inner surface of the upper. An inner surface of the upper may comprise a surface of the upper forming an inside of the shoe, e.g., forming an inside of the aperture of the shoe adapted to receive a foot. In other words, an inner surface of the upper may comprise a surface of the upper adapted to contact and/or to face a foot when an athlete is wearing the shoe. Specifically, the upper may cover at least a part of a lower surface of the sole unit such that at least a part of the inner surface of the upper contacts the at least part of the lower surface of the sole unit. For example, the upper may wrap around the at least part of the lower surface of the sole unit such that the inner surface of the upper contacts and/or encompasses the at least part of the lower surface of the sole unit. In other words, the upper may wrap around the at least part of the lower surface of the sole unit that that the inner surface of the upper wraps around the lower surface of the sole unit.

Bonding the at least part of the sole unit to the inner surface of the upper contributes to the improved stability of the shoe and ensures that the upper and the sole unit are fixed with respect to each other. Specifically, bonding the sole unit to the inner surface of the upper enables a fixing of the upper and the inserted sole unit, e.g., a sole unit inserted into the upper. In other words, bonding the at least part of the sole unit to the inner surface of the upper allows for a shoe comprising (separately) manufactured upper and sole unit while at the same time the shoe appears and/or behaves as a one-piece shoe. Thus, the shoe inherits the advantageous properties of the separately manufactured upper and sole unit, e.g., choosing the manufacturing method that fits best for the upper and the sole unit, while at the same time behaving as a (stable) one-piece shoe.

Generally, the upper may comprise at least one aperture. In addition, or alternatively, the sole unit may comprise at least one stud.

For example, the at least one aperture of the upper may be located and/or arranged in a region adapted to cover at least a part of the lower surface of the sole unit. In other words, the at least one aperture of the upper may be located and/or arranged such as to face a ground when an athlete wears the shoe. In addition, or alternatively, the sole unit may comprise at least one stud, e.g., an element protruding from the sole unit. Specifically, the at least one stud may protrude from the lower surface of the sole unit, e.g., the surface of the sole unit adapted to face a ground when an athlete wears the shoe.

Specifically, the at least one stud of the sole unit may protrude from the at least one aperture of the upper. For example, the at least one stud may protrude from the at least one aperture such as to at least partially form a ground-engaging element of the shoe.

For example, a stud of the sole unit protruding from the at least one aperture of the upper may comprise that at least a part of the stud protrudes from the at least one aperture when the upper wraps around the at least part of the lower surface of the sole unit and/or when the sole unit is received by the upper. Generally, protruding from the at least one aperture of the upper may comprise that the at least part of the stud of the sole unit is introduced into the aperture of the upper. Specifically, the sole unit may be received by and/or inserted into the upper such that at least one stud of the sole unit is introduced into the at least one aperture of the upper. For example, a first stud of the sole unit may be introduced into a first aperture of the upper and a second stud of the sole unit may be introduced into a second aperture of the upper.

The sole unit may comprise a rim. For example, the rim may be arranged at a side of the sole unit adapted to face a ground. The rim may encircle the sole unit. In some embodiments, the rim may encircle the sole unit such that the rim is bounded and/or confined by the at least one stud base of the sole unit. Generally, the rim may be arranged such at the side of the sole unit adapted to face a ground that the rim forms and/or creates a raised ring. Specifically, the upper may be wrapped around the sole unit such that a boundary of the upper adjoins the rim of the sole unit. The rim, e.g., the raised ring, enables an improved alignment of the upper and the sole unit, thereby optimizing the quality of the shoe, thus the comfort of the athlete.

Specifically, the at least one stud of the sole unit may be introduced into the at least one aperture of the upper such that the at least one stud protrudes from the at least one aperture of the upper. For example, the first stud of the sole unit may be introduced such into the first aperture of the upper as to protrude from the first aperture and the second stud of the sole unit may be introduced such into the second aperture of the upper as to protrude from the second aperture.

Generally, the at least one stud of the sole unit may protrude such from the at least one aperture of the upper that the at least one stud protrudes from the inner surface of the upper towards an outer surface of the upper. Specifically, the outer surface of the upper may comprise an outward-facing surface of the upper. In other words, the outer surface of the upper may comprise a surface of the upper that is opposite to the inner surface of the upper. In general, the at least one stud of the sole unit may protrude from the at least one aperture such as to form a ground-engaging element of the shoe. A ground-engaging element of a shoe may comprise a portion of the shoe adapted to engage and/or contact a ground when an athlete is wearing the shoe.

At least one stud of the sole unit protruding from the at least one aperture of the upper allows for an upper that wraps around the at least part of the lower surface of the sole unit while at the same time allowing for studs of the sole unit that form a ground-engaging element of the shoe. In other words, the sole unit can be received by and/or inserted into the upper, e.g., arranged within the upper, while at the same time the at least one stud of the sole unit forms a ground-engaging element. Thus, the at least one aperture of the upper allows for the (separate) manufacturing of the upper based on the first additive manufacturing method and the manufacturing of the sole element based on the second additive manufacturing method. Moreover, by enabling the insertion of the sole unit into the into the upper, the production process of the shoe is facilitated as it simplifies the assembling of the sole unit and the upper to the shoe.

In general, a geometry of the at least one aperture may be based on a geometry of the at least one stud. In addition, or alternatively, a size of the at least one aperture may be based on a size of the at least one stud. In addition, or alternatively, a number of the at least one aperture may be based on a number of the at least one stud. In addition, or alternatively, a location of the at least one aperture may be based on a location of the at least one stud.

For example, the geometry of a first aperture of the upper may be based on a geometry of a first stud of the sole unit. In addition, the geometry of a second aperture may be based on a geometry of a second stud of the sole unit. Specifically, the first stud may be adapted to protrude from the first aperture and the second stud may be adapted to protrude from the second aperture. In other words, different apertures of the upper may comprise a different geometry, e.g., a geometry which may be based on a geometry of a respective stud of the sole unit. In addition, or alternatively, the geometry of the at least one stud of the sole unit may be based on the geometry of the at least one aperture of the upper.

In addition, or alternatively, the size of the first aperture of the upper may be based on a size of the first stud of the sole unit. In addition, the size of the second aperture may be based on a geometry of the second stud of the sole unit. In other words, different apertures of the upper may comprise a different size, e.g., a size which may be based on a size of a respective stud of the sole unit. In addition, or alternatively, the size of the at least one stud of the sole unit may be based on the size of the at least one aperture of the upper. Generally, the size of the at least one aperture of the upper and the size of the at least one stud of the sole unit may be adapted such that the at least one stud can be introduced into the at least one aperture and/or such that the at least one stud can protrude from the at least one aperture.

In addition, or alternatively, a location of the first aperture of the upper may be based on a location of the first stud of the sole unit. In addition, the location of the second aperture may be based on a location of the second stud of the sole unit.

Specifically, the location of the first aperture may be adapted such that the first stud can be introduced into the first aperture and/or such that the first stud can protrude from the first aperture, e.g., when the sole unit is arranged within the upper. In other words, the location of the at least one aperture of the upper and the at least one stud of the sole unit may be adapted such that, when the sole unit is arranged within the upper, the at least one aperture of the upper faces the at least one stud of the sole unit. In addition, or alternatively, the location of the at least one stud of the sole unit may be based on the location of the at least one aperture of the upper.

In addition, or alternatively, the number of the at least one aperture of the upper may be based on a number of the at least one stud of the sole unit. For example, the number of apertures of the upper may coincide with the number of studs of the sole unit. In other words, for each stud of the sole unit there may be a corresponding aperture of the upper, e.g., a corresponding aperture from which the stud of the upper can protrude. In addition, or alternatively, the number of the at least one stud of the sole unit may be based on the number of the at least one aperture of the upper.

Adapting a geometry and/or size and/or number and/or location of the at least one aperture of the upper based on a geometry and/or size and/or number and/or location of the at least one stud of the sole unit allows for arranging the sole unit within the upper, e.g., arranging the sole unit such within the upper that the at least one stud protrudes from the at least one aperture. Therefore, the adaption of the geometry and/or size and/or number and/or location of the at least one aperture enables the (separate) manufacturing of the upper and the sole unit, thereby contributing to the optimal choice of the respective manufacturing method, thus improving the grade of customization of the shoe. Improving the grade of customization of the shoe optimizes the wearing comfort and the performance of an athlete wearing the shoe.

Specifically, the sole unit may comprise at least 2 studs. Alternatively, the sole unit may comprise at least 4 studs. Alternatively, the sole unit may comprise at least 6 studs. Alternatively, the sole unit may comprise at least 8 studs. Alternatively, the sole unit may comprise at least 10 studs.

Generally, the number of studs may be at least partially based on a size of the sole unit and/or shoe. In addition, or alternatively, the number of studs may be based on a size of the at least one stud. In addition, or alternatively, the number of apertures of the upper may mirror the number of studs of the sole unit. In other words, the upper may comprise at least 2 apertures, preferably at least 4 apertures, more preferably at least 6 apertures, even more preferably at least 8 apertures, most preferably at least 10 apertures.

A sole unit comprising at least 2 studs guarantees that the shoe provides sufficient traction and stability to the athlete when wearing the shoe. In addition, a sole unit comprising at least 2 studs prevents the shoe from sliding, e.g., sliding from a surface like grass. Thus, a sole unit comprising at least 2 studs contributes to an improved performance of the athlete.

In addition, or alternatively, the sole unit may comprise at most 30 studs. Alternatively, the sole unit may comprise at most 26 studs. Alternatively, the sole unit may comprise at most 22 studs. Alternatively, the sole unit may comprise at most 18 studs. Alternatively, the sole unit may comprise at most 14 studs.

A sole unit comprising at most 30 studs guarantees that a size of the studs is sufficiently large to provide sufficient traction. In addition, studs that are sufficiently large contribute to a stability of the stud and the sole unit. Moreover, a sole unit comprising at most 30 studs ensures that the upper may comprise at most 30 apertures. An upper comprising at most 30 apertures contributes to the stability and connectivity of the upper, thereby improving the longevity and stability of the shoe.

In some embodiments, the at least one stud may be arranged in a region of the sole unit adapted to receive a forefoot. In addition, or alternatively, the at least one stud may be arranged in a region of the sole unit adapted to receive a rearfoot. In addition, or alternatively, the at least one stud may be arranged in a lateral region of the sole unit. In addition, or alternatively, the at least one stud may be arranged in a medial region of the sole unit. For example, the at least one stud may be arranged in an outer lateral and/or an outer medial region.

For example, a first stud may be arranged in a region of the sole unit adapted to receive a forefoot and a second stud may be arranged in a region adapted to receive a rearfoot. Specifically, the first stud may be arranged in a lateral forefoot region and the second stud may be arranged in a medial rearfoot region. Alternatively, the first stud may be arranged in a medial forefoot region and the second stud may be arranged in a lateral rearfoot region. Generally, the at least one stud may be arranged in an outer lateral and/or outer medial region. For example, the first stud may be arranged in an outer lateral forefoot region and the second stud may be arranged in an outer medial rearfoot region. Specifically, an outer lateral and/or outer medial region of the sole unit may comprise a lateral and/or medial boundary region of the sole unit.

In some embodiments, a plurality of studs may be arranged in region of the sole unit adapted to receive the forefoot. For example, at least 2, preferably at least 3, more preferably at 4, even more preferably at least 5, most preferably at least 6 studs may be arranged in the region of the sole unit adapted to receive the forefoot. For example, at least one, preferably at least 2, most preferably at least 3 studs may be arranged in an outer medial forefoot region and/or at least one, preferably at least 2, most preferably at least 3 studs may be arranged in an outer lateral forefoot region. In addition, at least one stud may be arranged in a centre forefoot region, e.g., a forefoot region, where the lateral forefoot region transitions into the medial forefoot region.

In addition, or alternatively, a plurality of studs may be arranged in the region of the sole unit adapted to receive the rearfoot. Specifically, at least 2, preferably at least 3, most preferably at least 4 studs may be arranged in the region of the sole unit adapted to receive the rearfoot. For example, at least one, preferably at least 2 studs may be arranged in a (outer) medial rearfoot region of the sole unit and/or at least one, preferably at least 2 studs may be arranged in a (outer) lateral rearfoot region of the sole unit. In some embodiments, the sole unit may not comprise a stud in a region of the sole unit adapted to receive a midfoot. For example, the sole unit may comprise at least one rib in the region of the sole unit adapted to receive a midfoot. Specifically, the at least one rib may be arranged at a (outer) medial and/or lateral midfoot region. For example, a first rib may be arranged in a (outer) medial midfoot region of the sole unit and a second rib may be arranged in a (outer) lateral midfoot region of the sole unit.

In general, the at least one stud may comprise a coating. For example, the coating may be based on polyurethane. In addition, or alternatively, the coating may be based on thermoplastic polyurethane.

For example, a surface of the at least one stud may be coated. For example, the at least one stud may be coated such that the coating protrudes from the at least one aperture of the upper when the sole unit is arranged within the upper. Generally, the coating may be based on polyurethane and/or thermoplastic polyurethane. For example, the surface of the at least one stud may be coated when the sole unit is arranged within the upper. For example, the surface of the at least one stud may be coated such that, after curing the coating material, e.g., polyurethane and/or thermoplastic polyurethane, an interlock is created between the at least one stud and the cured coating. Specifically, the surface of the at least one stud may be coated such that the (cured) coating forms at least a part of a respective stud tip. In other words, the at least one stud of the sole unit may comprise a stud base and a stud tip may be coated onto the stud base. In general, the at least one stud base of the sole unit may comprise a surface structure. Specifically, the surface structure of the at least one stud of the sole structure may be adapted such as to enable a mechanical joining between the surface structure of the at least one stud and the (cured) coating.

The at least one stud comprising a coating, e.g., a coating that at least partially forms a stud tip, allows for the creation of stud tips with a high attachment stability, e.g., a high attachment stability between the at least one stud (base) of the sole unit and the (cured) coating of the at least one stud (base) at least partially forming the respective stud tip. Maximizing the attachment stability ensures that the (cured) coating, e.g., the stud tip, does not uncouple from the at least one stud (base) of the sole unit when the shoe is worn by an athlete, thereby improving the quality and longevity of the shoe.

Generally, the at least one stud base and the at least one stud tip may be displaced. For example, a first stud base may be displaced with respect to a first stud tip, e.g., a first stud tip moulded on the first stud base, and a second stud base may be displaced with respect to a second stud tip, e.g., a stud tip moulded on the first stud base. In some embodiments, a displacement between a stud base and a stud tip may comprise an offset. For example, the at least one stud tip may be arranged, e.g., moulded, on the at least one stud base such as to form/create an offset. For example, the offset may be at least partially based on a width difference between the stud tip and the stud base. For example, a width associated with the stud base may be smaller than a width associated with the stud tip. An offset between the stud base and the stud tip ensures a smooth transition between the upper, e.g., the upper that wraps around the sole unit, and the sole unit. A smooth transition between the upper and the sole unit improves the functionality of the shoe and thus optimizes the performance of the athlete.

Generally, the shoe may comprise a tongue. For example, the tongue of the shoe may be arranged at a top region of the shoe and/or upper. Specifically, the tongue may be adapted to protect the foot of an athlete, e.g., the back of the foot of the athlete. In addition, or alternatively, the tongue of the shoe may be adapted such as to contribute to the cushioning and/or the shock absorption. In some embodiments, the tongue may comprise a cushioning lattice, e.g., the tongue may be manufactured such that the tongue comprises a lattice structure.

For example, the tongue may be attached to the upper of the shoe. Particularly, the tongue may comprise a separately manufactured tongue. In addition, or alternatively, the tongue may comprise a tongue which is integrally manufactured with the upper of the shoe. For example, the tongue may be manufactured based on the first additive manufacturing method. In addition, or alternatively, the tongue may be manufactured integrally with the upper, e.g., manufactured based on the first manufacturing method. Specifically, the tongue may be manufactured such that the tongue comprises a lattice structure.

Specifically, when the tongue comprises a separately manufactured tongue, at least a part of the tongue may be attached to the upper, e.g., by gluing and/or stitching. For example, a separately manufactured tongue may comprise that the tongue is not integrally manufactured together with the upper. Specifically, the tongue may not be manufactured based on the first additive manufacturing method.

Generally, a thickness of the sole unit may be at least 0.3 mm. Alternatively, a thickness of the sole unit may be at least 0.6 mm. Alternatively, a thickness of the sole unit may be at least 0.9 mm. Alternatively, a thickness of the sole unit may be at least 1.2 mm. Alternatively, a thickness of the sole unit may be at least 1.5 mm. In addition, or alternatively, a thickness of the sole unit may be at most 4 mm. Alternatively, a thickness of the sole unit may be at most 3.5 mm. Alternatively, a thickness of the sole unit may be at most 3.0 mm. Alternatively, a thickness of the sole unit may be at most 2.5 mm. Alternatively, a thickness of the sole unit may be at most 2.0 mm.

For example, the thickness of the sole unit may vary along the sole unit. In other words, in a first region the sole unit may comprise a first thickness and in a second region the sole unit may comprise a second thickness. Specifically, the thickness of the sole unit may vary continuously and/or smoothly. For example, the thickness between the first region comprising the first thickness and the second region comprising the second thickness may vary continuously and/or smoothly. Generally, the thickness of the sole unit may be adapted based on the needs of the individual athlete. For example, a sole unit of a shoe for a first athlete may comprise a first thickness and/or thickness distribution and a sole unit of a shoe for a second athlete may comprise a second thickness and/or thickness distribution. In addition, or alternatively, the thickness of the sole unit may be at least partially based on the second additive manufacturing method and/or the second printing material.

A thickness of the sole unit of at least 0.3 mm and most 4 mm ensures that the sole unit is sufficiently stable and robust against the forces acting when an athlete is wearing the shoe while at the same time contributing to a minimization of the weight of the sole unit and thereby of the shoe comprising the sole unit. Minimizing the weight of the sole unit enables faster movements of the athlete and provides the agility.

In general, the sole unit may comprise at least one stiffening element. For example, the at least one stiffening element may be integrally manufactured with the sole unit.

For example, the at least one stiffening element may be adapted to stiffen at least a part of the sole unit and/or the shoe comprising the sole unit. Specifically, the at least one stiffening element may be arranged on an upper surface of the sole unit, e.g., a surface of the sole unit opposite to the lower surface of the sole unit. In other words, the upper surface of the sole unit may comprise a surface adapted to face a foot. In some embodiments, the at least one stiffening element may be attached to the upper surface of the sole unit, e.g., by gluing and/or bonding at least a part of the stiffening element to the upper surface of the sole unit. In addition, or alternatively, the at least one stiffening element may be integrally manufactured with the sole unit, e.g., integrally manufactured based on the second additive manufacturing method. For example, the at least one stiffening element may be integrally manufactured with the sole unit such that the at least one stiffening element is arranged at the upper side of the sole unit. In some embodiments, the at least one stiffening element may be integrally manufactured with the sole unit such that the at least one stiffening element is based at least partially on a different printing material than the printing material of the sole unit. For example, the at least one stiffening element may be manufactured based on a printing material such that the stiffening element, e.g., after curing, is stiffer than the sole unit.

In general, the at least one stiffening element may comprise at least one rod and/or at least one finger. Specifically, the at least one stiffening element may comprise 2, preferably at least 3, more preferably at least 5, most preferably at least 6 fingers and/or rods. For example, the at least one finger and/or the at least one rod of the stiffening element may be connected. For example, the at least one finger and/or the at least one rod may connect in a region of the sole unit adapted to receive a midfoot and/or a rearfoot. In some embodiments, at least one finger and/or at least one rod may be arranged at a (outer) medial and/or lateral region of the sole unit.

A sole unit comprising at least one stiffening element, e.g., a stiffening element integrally manufactured with the sole unit, contributes to the stiffness and the stability of the sole unit and/or shoe. In particular, by using a stiffening element comprising at least one rod and/or finger, additional stiffness can be provided in regions of the sole unit stiffness where stiffness is needed, e.g., at lateral and/or medial boundary regions of the sole unit and/or shoe. In other words, the at least one stiffening element allows for steering the stiffness of the sole unit and thereby of the shoe. In particular, the stiffness of the sole unit and/or shoe can be steered such as to exactly meet the individual needs of the athlete. In addition, the at least one stiffening element contributes to an improved energy return of the sole unit and/or shoe. An improved and/or maximized energy return of the sole unit and/or shoe maximizes the performance of the athlete wearing the shoe.

In some embodiments, the upper may comprise at least one cushioning element integrated in an inner surface of the upper. Specifically, the at least one cushioning element may comprise an integrally printed lattice structure.

For example, a cushioning element integrated in an inner surface of the upper may comprise that the cushioning element is arranged at the inner surface of the upper, e.g., a surface of the upper adapted to face a foot. Specifically, arranging the cushioning element at the inner surface may comprise that at least a part of the cushioning element is adapted to face the foot when the shoe is worn by the athlete. In particular, the cushioning element may be arranged such at the inner surface of the upper such that at least a part of the cushioning element forms a part of the inner surface of the upper. In general, the cushioning element may be integrally manufactured with the upper of the shoe. For example, the at least one cushioning element may be manufactured based on the first additive manufacturing method, e.g., manufactured based on stereolithography. In some embodiments, the at least one cushioning element may comprise a lattice structure. For example, the at least one cushioning element may be integrally manufactured with the upper such that the cushioning element comprises a lattice structure. The lattice structure of the cushioning element may comprise a beam-based lattice structure.

An upper comprising at least one cushioning element allows for (additional) cushioning, thereby improving the wearing comfort and the performance of the athlete. In addition, a cushioning element integrated in the inner surface of the upper, e.g., as an integral part of the upper, reduces the number of separate components that must be manufactured, thereby increasing the efficiency of the manufacturing of the shoe. Moreover, a cushioning element comprising a lattice structure, e.g., a beam-based lattice structure, reduces the weight of the cushioning element and thereby of the shoe comprising the upper. Reducing the weight of the cushioning element and thereby of the shoe allows for faster movements and an improved agility of the athlete.

In addition, or alternatively, the at least one cushioning element may be arranged in a region of the upper adapted to receive a heel.

For example, the at least one cushioning element may be integrated in the inner surface of the upper such that the cushioning element is arranged in a heel region. Specifically, the at least one cushioning element may be arranged in the heel region such as to encompass the heel of a foot. In particular, the at least one cushioning element may be arranged at a side face of the inner surface of the upper. For example, the cushioning element may extend from a lateral heel region towards a medial heel region. Specifically, the at least one cushioning element may extend from a lateral side face of the inner surface of the upper towards a medial side surface of the inner surface of the upper.

In addition, or alternatively, at least one cushioning element may be arranged in a bottom region of the inner surface of the upper. For example, the bottom region of the inner surface of the upper may comprise a region of the upper adapted to receive a plantar surface of a foot. For example, the at least one cushioning element may be arranged in a heel bottom region of the inner surface. In general, the at least one cushioning element arranged in the bottom region of the inner surface of the upper may be at least partially integrated into the upper. For example, the at least one cushioning element arranged in the bottom region of the inner surface may be (integrally) manufactured with the upper, e.g., based on the first additive manufacturing method. In some embodiments, the at least one cushioning element may be arranged in the bottom surface of the upper such as to act as a sock liner, e.g., a 3D printed sock liner. Integrating the cushioning element into the bottom region of the inner surface of the upper allows for eliminating the need for a separate sock liner, thereby reducing the (separate) components needed for assembling the shoe.

In general, at least one part of an outer surface of the upper may comprise a lattice structure.

The outer surface of the upper may comprise an outward-facing surface of the upper, e.g., a surface of the upper that is visible from the outside. For example, the outer surface of the upper may not be adapted to face a foot. A part of the outer surface of the upper comprising the lattice structure may comprise that the part of the upper comprises a plurality of voids. For example, the lattice may be based on a plurality of beams, e.g., beams forming the lattice structure. Specifically, the beams may form the plurality of voids, e.g., spacings between the plurality of beams. Generally, the beams may be adapted to intersect each other, e.g., a first beam may intersect a second beam.

In some embodiments, the upper may comprise at least two parts comprising the lattice structure. For example, a first part may comprise a first lattice structure and a second part may comprise a second lattice structure. The first part may be arranged at a first region of the upper and the second part may be arranged at a second region of the upper. Generally, the first part and the second part may be unconnected parts, e.g., the first part and the second part may be separated from each other by a region of the upper not comprising a lattice structure. Generally, a region of the upper not comprising the lattice structure may comprise a closed and/or continuous region, e.g., a region of the upper without voids.

For example, the at least one part of the outer surface comprising the lattice structure may be arranged at an instep area of the upper and/or shoe.

For example, the at least one part may be arranged at a medial side of the instep area and/or a lateral side of the instep area. For example, the at least one part comprising the lattice structure may be arranged such as to encompass the instep area of the upper and/or shoe. In addition, or alternatively, the at least one part may be arranged at a region of the upper adapted to receive an arch of the foot. For example, the at least one part comprising the lattice structure may be arranged at the region adapted to receive an arch and may continue towards a medial instep area of the upper and/or shoe. Generally, the at least one part comprising the lattice structure may not be arranged at a forefoot region of the upper. Specifically, the at least one comprising the lattice structure may not be arranged at a lateral forefoot region of the upper.

An upper, wherein at least one part an outer surface comprises a lattice structure contributes to an improved and higher breathability. Specifically, by arranging the lattice structure at particular parts of the outer surface, the location of parts with a high breathability can be steered such as to meet the individual needs of an athlete. In addition, the at least part of the outer surface comprising the lattice structure contributes to a minimization of the weight of the upper and thereby to a minimization of a weight of a shoe comprising the upper. Minimizing the weight of a show comprising the upper enables faster movements and an improved agility of the athlete. In addition, not arranging the at least one part comprising the lattice structure in a region of the upper adapted to receive a forefoot ensures that the upper, and thereby the shoe comprising the upper, meet waterproofing requirements.

A second aspect relates to a method for manufacturing a shoe, preferably a sports shoe. The method comprises the step of manufacturing an upper based on a first additive manufacturing method. In addition, the method comprises the step of manufacturing a sole unit based on a second additive manufacturing method. Specifically, the second additive manufacturing method is different from the second additive manufacturing method.

In general, the above-described shoe may have been manufactured by the method for manufacturing the shoe. Specifically, aspects described in the context of the above-described upper may also apply to the method for manufacturing the shoe. In particular, a property and/or a feature of the shoe described above may also apply to the method for manufacturing the shoe. In other words, the method for manufacturing the shoe may be adapted such as to obtain the above-described shoe.

Manufacturing the upper based on the first additive manufacturing method may comprise to produce and/or manufacture at least 60%, preferably at least 70%, more preferably at least 80%, even more preferably at least 90%, most preferably at least 95% of the upper based on the first additive manufacturing method. Manufacturing the upper based on the first additive manufacturing method may comprise that the upper is manufactured by the first additive manufacturing method. In general, the first additive manufacturing method may be based on 3D printing. For example, manufacturing the upper based on the first additive manufacturing method may comprise 3D printing the upper based on the first additive manufacturing method.

In addition, or alternatively, manufacturing the sole unit based on the second additive manufacturing method may comprise to produce and/or manufacture at least 60%, preferably at least 70%, more preferably at least 80%, even more preferably at least 90%, most preferably at least 95% of the sole unit based on the second additive manufacturing method. Manufacturing the sole unit based on the second additive manufacturing method may comprise that the sole unit is manufactured by the second additive manufacturing method. In general, the second additive manufacturing method may be based on 3D printing. For example, manufacturing the sole unit based on the second additive manufacturing method may comprise 3D printing the sole unit based on the second additive manufacturing method.

Manufacturing the upper and the sole unit of a shoe by two different additive manufacturing methods allows for manufacturing the upper and the sole unit by an additive manufacturing method that fits best for the upper and the sole unit. Specifically, the upper of the shoe may has to fulfil other requirements than the sole unit of the shoe. In other words, the sole unit may be subjected to different forces when wearing the shoe than the upper of the shoe. For example, manufacturing the upper and the sole unit of the shoe by two different additive manufacturing methods allows for manufacturing a stiffer and more durable sole unit while at the same time allowing for manufacturing a light-weight upper. Thus, using two different additive manufacturing methods enables to tailor-fit the upper and the sole unit more precisely to the needs of an athlete, thereby maximizing the grade of customization. Maximizing the grade of customization improves the performance of the athlete wearing the shoe.

Generally, the first additive manufacturing method may comprise stereolithography. In addition, or alternatively, the second additive manufacturing method may comprise selective laser sintering.

For example, the upper may be manufactured based in stereolithography. For example, the upper may be manufactured based on Digital Light Synthesis (DLS). Being manufactured based on stereolithography may comprise that essentially the complete upper is manufactured by stereolithography. Essentially completely manufacturing the upper by stereolithography may comprise that at least 70%, preferably at least 80%, more preferably at least 85%, even more preferably at least 90%, most preferably at least 95% of the upper is manufactured by stereolithography. In some embodiments, the complete upper may be manufactured by stereolithography.

In addition, or alternatively, the sole unit may be manufactured based on selective laser sintering. Being manufactured based on s selective laser sintering may comprise that essentially the complete sole unit is manufactured by selective laser sintering. Essentially completely manufacturing the sole unit by selective laser sintering may comprise that at least 70%, preferably at least 80%, more preferably at least 85%, even more preferably at least 90%, most preferably at least 95% of the sole unit is manufactured by selective laser sintering. In some embodiments, the complete sole unit may be manufactured by selective laser sintering.

Manufacturing the upper based on stereolithography and/or manufacturing the sole unit based on selective laser sintering contributes to the adaption of the manufacturing method to the particular (physical) requirements of the upper, e.g., breathability, flexibility and durability, and/or the sole unit, e.g., traction and stability. In addition, manufacturing the upper based on stereolithography and/or manufacturing the sole unit based on selective laser sintering contributes to a higher grade of customization, thereby improving the performance of an athlete.

In some embodiments, the method for manufacturing a shoe may further comprise the step of arranging at least a part of the sole unit on an inner side of the upper. For example, the at least a part of the sole unit may be arranged such on the inner side of the upper that the upper wraps around the at least part of the sole unit.

Arranging the at least part of the sole unit on the inner side of the upper may comprise inserting the at least part of the sole unit into the upper. For example, the at least part of the sole unit may be inserted through an ankle opening of the upper. In some embodiments, the sole unit may be inserted such through the ankle opening of the upper into the upper that the upper wraps around the at least part of the sole unit. In general, arranging the at least part of the sole unit on the inner side of the upper may comprise aligning the at least part of the sole unit such that at least one stud of the sole unit protrudes through at least one aperture of the upper. In addition, or alternatively, arranging the at least part of the sole unit on the inner side of the upper may comprise inserting essentially the complete sole unit into the upper.

In general, the method for manufacturing a shoe may further comprise the step of bonding at least a part of the upper to at least a part of the sole unit. Specifically, bonding the at least part of the upper to the at least part of the sole unit may comprise bonding the at least part of the upper to the at least part of the sole unit.

In some embodiments, the method for manufacturing a shoe may further comprise the step of scanning a foot.

For example, scanning a foot may comprise scanning the foot of a particular athlete, e.g., the foot of an athlete adapted to wear the shoe manufactured by the described method. Specifically, the scanning the foot may be at least partially based on a 3D scan of the foot. In some embodiments, scanning the foot may comprise scanning a left foot and/or a right foot. For example, scanning the foot may comprise scanning the right and the left foot of the athlete.

Scanning the foot of an athlete allows for tailoring the upper and/or the sole unit of the shoe to the particular body proportions of the athlete, e.g., a size and/or a geometry of the foot. Tailoring the upper and/or the sole unit of the shoe to the particular body proportions of the athlete maximizes the grade of customization of the shoe, thereby optimizing the performance of the respective athlete.

Specifically, the method for manufacturing a shoe may further comprise the step of manufacturing a last at least partially based on the scanning of the foot. For example, manufacturing the last may comprise generating a virtual and/or digital last at least partially based on the scanning of the foot.

Specifically, generating a virtual and/or digital last may comprise generating a CAD. For example, the CAD model may be generated based on the scan, e.g., the 3D scan, of the foot. In some embodiments, the digital and/or virtual last may define a (global) volume for designing the upper. In addition, based on the digital and/or virtual last, a physical last may be manufactured. For example, the physical last may be used for manufacturing a shoe. In addition, or alternatively, manufacturing the upper based on the first additive manufacturing method and/or manufacturing the sole unit based on the second additive manufacturing method may be based on the digital and/or virtual last, e.g., based on the CAD model of the foot.

### Brief description of the figures

In the following, exemplary embodiments of the invention are described with reference to the figures. The figures show:
- **Fig. 1A:**: Lateral side view of an exemplary embodiment of a shoe according to the present invention;
- **Fig. 1B:**: Front top view of an exemplary embodiment of a shoe according to the present invention;
- **Fig. 2A:**: Bottom side view of an exemplary embodiment of an upper according to the present invention:
- **Fig. 2B:**: Lateral top side view of an exemplary embodiment of an upper according to the present invention;
- **Fig. 2C:**: Detailed top view of an ankle region of an exemplary embodiment of an upper comprising a cushioning element according to the present invention;
- **Fig. 3:**: Cross-section of an exemplary embodiment of an upper according to the present invention, wherein the upper comprises a cushioning element in a region adapted to receive a sole of a foot;
- **Fig. 4:**: Bottom side view of an exemplary embodiment of a sole unit comprising a plurality of studs according to the present invention;
- **Fig. 5:**: Bottom side view of an exemplary embodiment of a shoe according to the present invention, wherein the sole unit is inserted into the upper;
- **Fig. 6:**: Lateral side view of an exemplary embodiment of a shoe according to the present invention, wherein the sole is not fully inserted into the upper;
- **Fig. 7:**: Lateral top side view of an exemplary embodiment of a shoe according to the present invention, wherein the upper comprises a lattice structure;
- **Fig. 8:**: Lateral side view of an exemplary embodiment of a shoe according to the present invention, wherein the upper comprises a lattice structure;
- **Fig. 9:**: Top view of an exemplary embodiment of a sole unit and a support element according to the present invention;
- **Fig. 10A:**: Lateral side view of an exemplary embodiment of a shoe according to the present invention;
- **Fig. 10B:**: Medial side view of an exemplary embodiment of a shoe according to the present invention;
- **Fig. 10C:**: Bottom side view of an exemplary embodiment of a shoe according to the present invention;
- **Fig. 11A:**: Bottom side view of an exemplary embodiment of a sole unit according to the present invention, wherein the stud bases and the stud tips are displaced by an offset;
- **Fig. 11B:**: Lateral side view of an exemplary embodiment of a sole unit according to the present invention, wherein the stud bases and the stud tips are displaced by an offset;
- **Fig. 12A:**: Bottom side view of an exemplary embodiment of a shoe according to the present invention, comprising a sole unit and an upper;
- **Fig. 12B:**: Medial side view of an exemplary embodiment of a shoe according to the present invention, comprising a sole unit and an upper;
- **Fig.13A:**: Lateral side view of an exemplary embodiment of an upper according to the present invention, wherein a beam-based lattice structure transitions into a closed region of the upper based on stacked beams;
- **Fig.13B:**: Enlarged view of the transition of the beam-based lattice structure into the closed region of the upper based on stacked beams;
- **Fig. 14A:**: Lateral side view of an exemplary embodiment of an upper according to the present invention, wherein a beam-based lattice structure transitions into a closed region of the upper;
- **Fig. 14B:**: Enlarged view of the transition of the beam-based lattice structure into the closed region of the upper;
- **Fig. 15:**: Schematic illustration of an exemplary embodiment of a method for manufacturing a shoe according to the present invention.

### Detailed description of preferred embodiments

In the following, only some possible embodiments of the invention are described in detail. It is to be understood that these exemplary embodiments can be modified in a number of ways and combined with each other whenever compatible and that certain features may be omitted in so far as they appear dispensable. In particular, the disclosed embodiments may be modified by combining certain features of one embodiment with one or more features of another embodiment.

It is to be understood that not all features of the described aspects / embodiments have to be present for realizing the technical advantages provided by the present disclosure, which is defined by the subject-matter of the claims. The disclosed embodiments may be modified by combining certain features of one embodiment with one or more features of another embodiment. Specifically, the skilled person will understand that features, and / or functional elements of one aspect / embodiment can be combined with technically compatible features, and / or functional elements of any other aspect / embodiment of the present disclosure given that the resulting combination falls within the definition of the present disclosure.

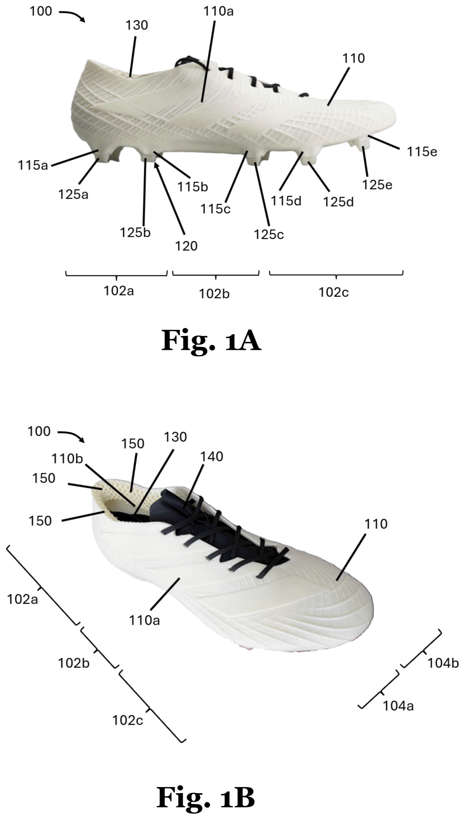

Figures 1A and 1B show an exemplary embodiment of a shoe 100 according to the present invention. The shoe 100 comprises an upper 110 and a sole unit 120. Specifically, the upper 110 may be manufactured based on a first additive manufacturing method. In addition, the sole unit 120 may be manufactured based on a second additive manufacturing method. Generally, the first and the second additive manufacturing method may be different. In other words, the upper 110 and the sole unit 120 may be manufactured based on different additive manufacturing methods. For example, the upper 110 may be manufactured based on stereolithography. In addition, or alternatively, the sole unit 120 may be manufactured based on selective laser sintering. Moreover, the upper 110 may be manufactured based on a first printing material comprising resin, e.g., a resin comprising moisture cured urethane and/or expanded elastomeric polyurethane. In addition, or alternatively, the sole unit 120 may be manufactured based on a second printing material comprising a powder. For example, the powder may comprise polyamide. The upper 110 comprises an outer surface 110a and an inner surface 110b. Specifically, the outer surface 110a of the upper 110 comprises an outward facing surface. In addition, the inner surface 110b of the upper 110 comprises a surface adapted to face a foot. The outer surface 110a of the upper 110 comprises a closed surface. In other words, the outer surface 110a of the upper 110 does not comprise a lattice structure comprising voids, e.g., voids that permeate and/or penetrate the upper 110.

The sole unit 120 is inserted into the upper 110. For example, the sole unit 120 may be inserted into the upper 110 through the ankle opening 130 of the shoe 100. Specifically, the upper 110 wraps around the sole unit 120. In other words, the sole unit 120 is arranged within the upper 110. Specifically, essentially the complete sole unit 120 is arranged within the upper 110. The upper 110 covers a portion of a lower surface of the sole unit 120, e.g., a surface of the sole unit 120 adapted to face a ground. In addition, the shoe 100 comprises a tongue 140. The tongue 140 comprises a separately manufactured tongue, i.e., the tongue 140 is not integrally manufactured and/or printed with the upper 110 of the shoe 100.

The upper 110 comprises a plurality of apertures 115a-115e. The apertures 115a, 115b are arranged in a region 102a adapted to receive a rearfoot. Specifically, the apertures 115a, 115b are arranged at a (outer) lateral side 104a of the upper 110. In addition, the upper 110 comprises apertures 115c, 115d, 115e that are arranged in a region 102c adapted to receive a forefoot. The aperture 115c is arranged in a transition region between the region 102c adapted to receive a rearfoot and a region 102b adapted to receive a midfoot. The apertures 115c, 115d, 115e are arranged at a (outer) lateral side 104b of the upper 110. In addition, no apertures are arranged within the region 102b adapted to receive a midfoot. In general, the upper 110 may further comprise apertures arranged at a medial side 104b of the upper 110. For example, the apertures at the medial side 104b of the upper 110 may be arranged such as to essentially mirror the apertures 115a-115e at the lateral side 104a of the upper 110.

The sole unit 120 comprises a plurality 125a-125e of studs. Specifically, the studs 125a, 125b are arranged at a region 102a of the sole unit 120 adapted to receive a rearfoot. In addition, the studs 125c, 125d, 125e are arranged in a region 102c of the sole unit 120 adapted to receive a forefoot. In particular, the stud 125c is arranged in a transition region, e.g., a region between the region 102c adapted to receive a forefoot and a region 102b adapted to receive a midfoot. In addition, the studs 125a, 125b are arranged at a (outer) lateral 104a region of the rearfoot region 102a and the studs 125c, 125f, 125e are arranged at a (outer) lateral region 104a of the forefoot region 102a. Specifically, no stud may be arranged within the region 102b adapted to receive a midfoot.

The studs 125a-125e of the sole unit 120 protrude from the apertures 115a-115e of the upper 110. For example, the stud 125a protrudes from the aperture 115a, the stud 125b protrudes from the aperture 115b, the stud 125c protrudes from the aperture 115c, the stud 125d protrudes from the aperture 115d, and the stud 125e protrudes from the aperture 115e. In general, a geometry and/or size of the apertures 115a-115e of the upper 110 may be based on a geometry and/or size of the respective stud 125a-125b of the sole unit 120. For example, a geometry and/or size of the aperture 115a may be based on a geometry and/or size of the stud 125a. In addition, or alternatively, a location of the apertures 115a-115e may be based on a location of the studs 125a-125e. In general, the number of apertures 115a-115e may coincide with the number of studs 125a-125e.

The upper 110 of the shoe 100 further comprises a cushioning element 150. The cushioning element 150 is arranged at the inner surface 110b of the upper 110. Specifically, the cushioning element 150 is integrated into the inner surface 110b of the upper 110. For example, the cushioning element 150 may be integrally manufactured with the upper 110, e.g., the cushioning element 150 may be manufactured based on the first additive manufacturing method. The cushioning element 150 comprises an integrally printed lattice structure. In particular, the cushioning element 150 comprises a beam-based lattice structure. The cushioning element 150 is arranged in a region of the upper 110 adapted to receive a heel. In particular, the cushioning element 150 encompasses the heel region of the upper 110. Specifically, the cushioning element 150 encompasses the heel region of the upper 110 such as to extend from a lateral 104a heel region to a medial 104b heel region of the upper 110. In other words, the cushioning element 150 encompasses the ankle opening 150 of the upper 110.

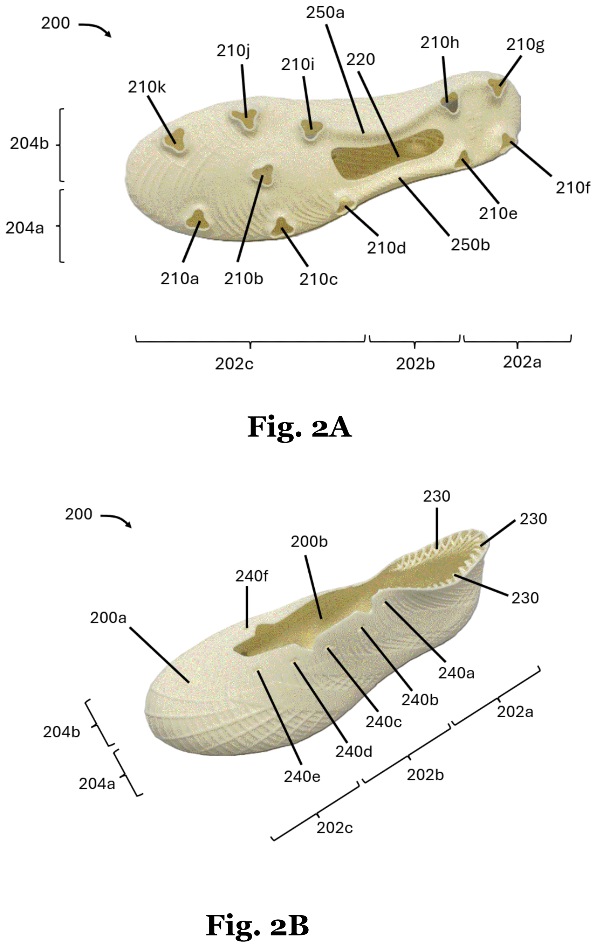

Figures 2A to 2C show an exemplary embodiment of an upper 200. The upper 200 may be manufactured based on a first additive manufacturing method, e.g., based on 3D printing. The upper 200 is separately manufactured from a sole unit. For example, the first additive manufacturing method may comprise stereolithography. In addition, the first additive manufacturing method may be based on a first printing material. The first printing material may comprise resin, e.g., moisture cured urethane and/or expanded elastomeric polyurethane. The upper 200 comprises an outer surface 200a and an inner surface 200b.

The upper 200 comprises a plurality of apertures 210a-210k. The apertures 210a-210k are arranged at a side of the upper 200 adapted to face a ground, e.g., when shoe comprising the upper 200 is worn by an athlete. The apertures 210a, 210b, 210c, 210k, 210j are arranged in a region 202c of the upper 200 adapted to receive a forefoot. Specifically, the apertures 210a, 210c are arranged at a (outer) lateral 204a region of the upper 200. In addition, the apertures 210j, 210k are arranged at a (outer) medial 210b region of the upper 200. The aperture 210b is arranged in a centre region of the upper, e.g., a region where the medial region 210b of the upper 200 transitions into the lateral region 210a of the upper 200. The apertures 210d and 210i are arranged at a region of the upper 200 where the region 202c adapted to receive a forefoot transitions into the region 202b adapted to receive a midfoot. Specifically, the aperture 210i is arranged at a (outer) medial 204b region of the upper 200 and the aperture 201d is arranged at a (outer) lateral 204a region of the upper 200. In addition, the apertures 210e-210h are arranged in a region 202a of the upper 200 adapted to receive a rearfoot. For example, the apertures 210e, 210f are arranged at a (outer) lateral portion 204a of the upper 200 and the apertures 210g, 210f are arranged at a (outer) medial portion 204b of the upper 200.

In addition, the upper 200 comprises an elongated aperture 220. The elongated aperture 220 is arranged in a region 202b of the upper 200 adapted to receive a midfoot. The elongated aperture 220 continues essentially along the complete region 202b of the upper 200 adapted to receive a midfoot. In other words, the elongated aperture 220 extends from the region 202a adapted to receive a rearfoot to the region 202c adapted to receive a forefoot. The elongated aperture 220 adjoints ribs 250a, 250b. Specifically, the elongated aperture 220 adjoints rib 250a at a lateral region 204a and adjoints rib 250b at a medial region 204b. The size and the geometry of the elongated aperture 220 essentially follows the size and the geometry of the upper 200 in the region 202b adapted to receive a midfoot.

The upper 200 further comprises a plurality of eyestays 240a-240f. Specifically, the eyestays 240-240e are arranged at a lateral side 204a of the upper 200. In addition, eyestay 240f is arranged at a medial side 204b of the upper 200. Generally, the number of eyestays on the lateral side 204a may coincide with the number of eyestays at the medial side 204b. In other words, for each eyestay at the lateral side 204a there may be a corresponding eyestay at the medial side 204b. The eyestays 240a-240f are integrally manufactured with the upper 200, e.g., manufactured based on the first additive manufacturing method.

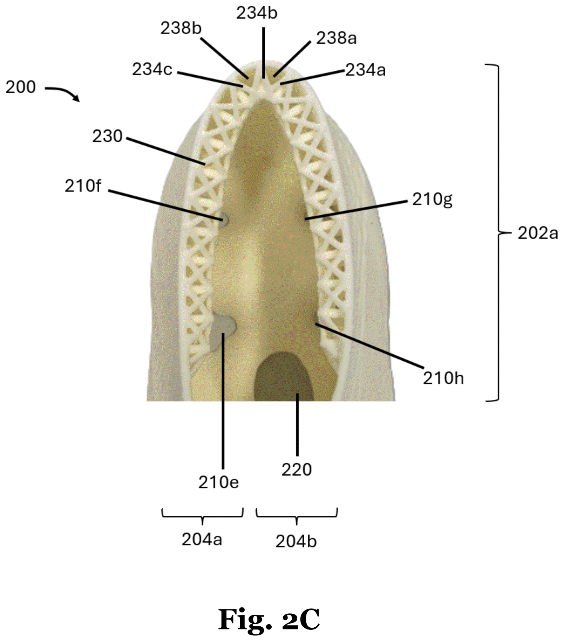

As best seen in Fig. 2C, the upper 200 further comprises a cushioning element 230. The cushioning element is arranged in a region of the upper 200 adapted to receive a heel. The region of the upper 200 adapted to receive a heel is a sub-region of the region 202a adapted to receive a rearfoot. The cushioning element 230 is integrated into the inner surface 210b of the upper 200. The cushioning element 230 extends from the lateral region 204a along the inner surface 210b of the upper 200 towards the medial region 204b of the upper 200. Specifically, the cushioning element 230 encompasses the heel region of the upper 200. The cushioning element 230 comprises an integrally printed lattice structure 234a-234c (not all labelled). Specifically, the integrally printed lattice structure 234a-234c comprises a beam-based lattice structure. In particular, the beams 234a-234c of the lattice structure are arranged such as to form voids 238a, 238b (not all labelled). For example, the void 238a is formed by the beams 234a, 234b and the void 238b is formed by the beams 224b and 234c.

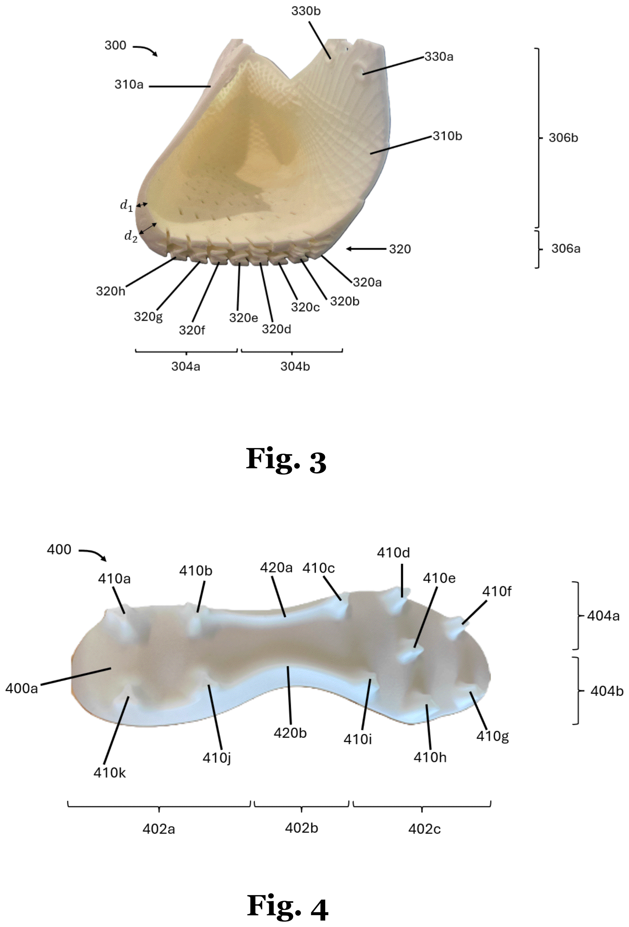

Figure 3 shows a cross-section of an exemplary embodiment of an upper 300. The upper 300 comprises an outer surface 310a and an inner surface 310b. A thickness of the upper 300 varies along the upper 300, e.g., from the top region 306b of the upper 300 towards the bottom region 306b of the upper 300. For example, the thickness of the upper is essentially constant in the top region 306b of the upper and increases towards the bottom region 306a of the upper 300. Specifically, the thickness of the upper 300 in the top region 306b is essentially *d*₁. The thickness of the upper 300 may (then) increase towards the bottom region 306a such that the thickness of the upper 300 is *d*₂. The thickness of the upper 300 increases continuously and/or smoothly along the upper 300. The thickness of the upper 300 may be maximal in the bottom region 306a of the upper 300.

The upper 300 further comprises a cushioning element 320 in the bottom region 306a of the upper. The cushioning element 320 is integrated into the bottom, e.g., the part of the upper 300 located in the bottom region 306a, of the upper 300. The cushioning element 320 comprises a plurality of cushioning members 320a-320h. The cushioning members 320a-320h extend from the lateral region 304a of the upper 300 towards the medial region 304b of the upper 300. The cushioning members 320a-320h comprise a spring-like shape. In particular, the spring-like shape of the cushioning members 320a-320h comprises a spring-like shape extending in a vertical, e.g., from the region 306a towards the region 306b, direction. In addition, the upper 300 comprises eyestays 330a, 330b.

Figure 4 shows a bottom side view of an exemplary embodiment of a sole unit 400. The sole unit 400 may be manufactured based on a second additive manufacturing method, e.g., based on 3D printing. Specifically, the sole unit 400 is separately manufactured from an upper. The sole unit 400 may be manufactured based on selective laser sintering. For example, the second additive manufacturing method may be based on a second printing material. For example, the second printing material may comprise a powder, e.g., a powder comprising polyamide. The sole unit 400 comprises an outer surface 400a, e.g., a surface adapted to face a ground when the sole unit 400 is arranged in shoe.

The sole unit 400 comprises a plurality of studs 410a-410k. Specifically, the studs 410a-410k comprise stud bases, e.g., each of the studs 410a-410k comprises a stud base. The studs 410a, 410b, 410j, 410k are arranged in a region 402a of the sole unit 400 adapted to receive a rearfoot. Specifically, the studs 410a, 410b are arranged at a (outer) lateral portion 404a of the sole unit 400 and the studs 410j, 410k are arranged at a (outer) medial portion 404b of the sole unit 400. In addition, the studs 410c-410i are arranged at a region 402c of the sole unit adapted to receive a forefoot. Specifically, the studs 410c, 41od, 410f are arranged at a (outer) lateral portion 404a of the sole unit 400. In addition, the studs 410g, 410h, 410i are arranged at a (outer) medial portion 404b of the sole unit 400. The stud 410e is arranged at a centre portion of the sole unit 400, e.g., a portion where the lateral portion 404a transitions into the medial portion 404b.

The sole unit 400 further comprises the ribs 420a, 420b. The ribs 420a, 420b are arranged at a region 420b of the sole unit 400 adapted to receive a midfoot. Specifically, the rib 420a is arranged at a (outer) lateral portion 404a and the rib 420b is arranged at a (outer) medial portion 404b of the sole unit 400. Specifically, the rib 420a extends between the stud 410b and the stud 410c. In addition, the rib 420b extends between the stud 410j and the stud 410i. The geometry, e.g., a curvature, of the ribs 420a, 420b essentially follows the geometry, e.g., a curvature, of the sole unit 400 in the region 402b adapted to receive a midfoot.

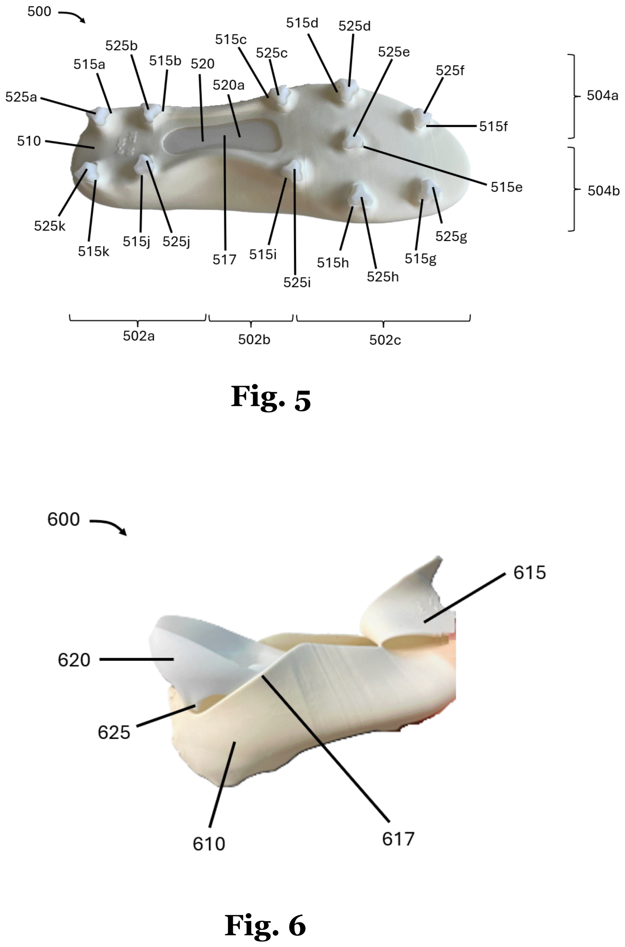

Figure 5 shows a bottom side view of an exemplary embodiment of a shoe 500. The shoe 500 comprises an upper 510 and a sole unit 520. Specifically, the sole unit 510 is arranged in the upper 510. The upper 510 wraps around a part of the lower surface 520a of the sole unit 520. In particular, the upper 510 covers a part of the lower surface 520a of the sole unit 520. The upper 510 comprises a plurality of apertures 515a-515k. The apertures 515a, 515b, 515j, 515k are arranged in a region 502a of the upper 510 adapted to receive a rearfoot. In addition, the apertures 515c-515i are arranged in a region 502c of the upper adapted to receive a forefoot. The upper 510 further comprises an elongated aperture 517. The elongated aperture 517 is arranged in a region 502b of the upper 510 adapted to receive a midfoot. The upper 510 and the sole unit 520 are separately manufactured, e.g., the upper 510 and the sole unit 520 are separate components of the shoe 500. A part of the sole unit 520 may be bonded to a part of the upper 510. For example, a part of the lower surface 520a of the sole unit 520 may be bonded to a part of the inner surface of the upper 510. In some embodiments, the part of the sole unit 520 may be bonding to the inner surface of the upper 510.

The sole unit 520 comprises a plurality of studs 525a-525k. The studs 525a-525k comprise stud bases. The studs 525a, 525b, 525j, 525k are arranged in a region 502a of the sole unit 520 adapted to receive a rearfoot. In addition, the studs 525c-525i are arranged in a region 502c of the sole unit 520 adapted to receive a forefoot. The studs 525a-525k protrude from the apertures 515a-515k. Specifically, the studs 525c-525i protrude from the apertures 515a-515k such as to form ground-engaging elements of the shoe 500. Each of the studs 525c-525i protrudes from a corresponding aperture 515a-515k. For example, the stud 525a protrudes from the aperture 515a and the stud 525b protrudes from the aperture 515b. In general, the size and/or geometry and/or location of an aperture 515a-515k is based on a size and/or geometry and/or location of a corresponding stud 525c-525i. For example, the size and/or geometry and/or location of the aperture 515a is based on the size and/or geometry and/or location of the stud 525a. Similarly, the size and/or geometry and/or location of the aperture 515b is based on the size and/or geometry and/or location of the stud 525b. In other words, the size and/or geometry and/or location of an aperture 515a-515k is such that a respective stud 525c-525i fits through the aperture 515a-515k.

Figure 6 shows a lateral side view of an exemplary embodiment of a shoe 600. The shoe 600 comprises an upper 610 and a sole unit 620. In the configuration illustrated in Fig. 6, the sole unit 620 is not fully inserted into and/or arranged within the upper 610. The sole unit 620 is partially inserted into the upper 610 through an ankle opening 617 of the upper 610. The sole unit 620 comprises at least one stud 625. The upper 610 comprises a tongue 615. The tongue 615 is integrally manufactured with the upper 610. In other words, the upper 610 and the tongue 615 are one-piece. The upper 610 may be manufactured based on a first additive manufacturing method, e.g., stereolithography. The tongue 615 may be manufactured based on the same additive manufacturing method as the upper 610, e.g., stereolithography.

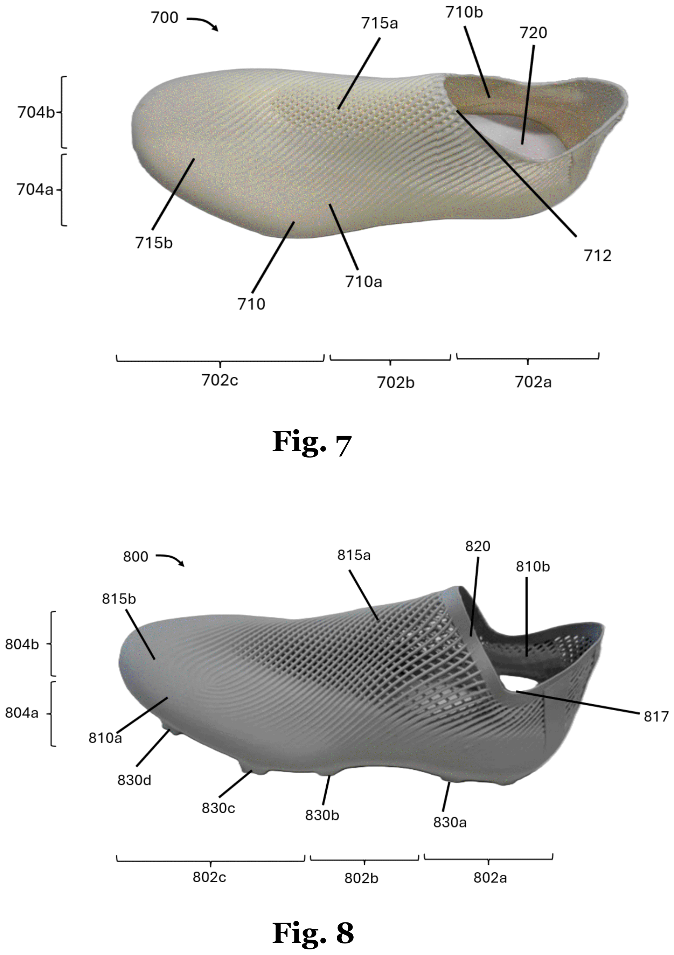

Figure 7 shows a lateral top side view of an exemplary embodiment of a shoe 700. The shoe 700 comprises an upper 710 and a sole unit 720. The sole unit 720 is inserted into the upper 710. Specifically, the sole unit 720 is inserted such into the upper 710 that the sole unit 720 is arranged within the upper 710. In particular, the upper 710 wraps around the sole unit 720. The upper 710 comprises an outer surface 710a and an inner surface 710b. The outer surface 710a of the upper 710 comprises regions 715a comprising a lattice structure and closed regions 715b. The lattice structure comprises a beam-based lattice structure. In particular, the beams of the beam-based lattice structure form voids in the upper 710, e.g., voids that permeate the upper 710. Specifically, the region 715a comprising the lattice structure is arranged at a region adapted to receive an arc. Specifically, the region 715a comprising the lattice structure is arranged in a region 702b adapted to receive a midfoot. The region 715a comprising the lattice structure originates at an ankle opening 712 of the upper 710 and continues towards the region 702b adapted to receive a midfoot. The region 715a terminates in a region 702c adapted to receive a forefoot. In addition, the region 715a comprising the lattice structure is arranged such that the lattice structure encompasses the ankle opening 712 of the upper 710. The region 715a comprising the lattice structure transitions into the closed region 715b. Specifically, the closed region 715b is arranged at a lateral 704a boundary region of the upper 710. In addition, the closed region 715b is arranged at a forefoot region 702c of the upper 710, particularly at a region adapted to receive a toe.

Figure 8 shows a lateral side view of an exemplary embodiment of a shoe 800. The shoe comprises an upper 810 and a sole plate (not visible). The upper 810 may be manufactured based on a first additive manufacturing method, e.g., based on 3D printing. The first additive manufacturing method may comprise stereolithography. The upper comprises an outer surface 810a and an inner surface 810b. The upper 810 further comprises an ankle opening 817. For example, the sole plate (not visible) may be inserted into the upper through the ankle opening 817. The upper 810 comprises a plurality of apertures 830a-830d. The plurality of apertures 830a-830d are arranged at a side of the upper 810 adapted to face a ground. The outer surface 810a of the upper 810 comprises a region 815a comprising a lattice structure and a closed region 815b. The closed region 815b is arranged at a lateral region 804a of the upper 810. Specifically, the closed region 815b is arranged at an outer lateral region 804a of the upper 810. In addition, the closed region 815b is arranged at a region 802c of the upper 810 adapted to receive a forefoot. In particular, the closed region 815b is arranged at a region of the upper 810 adapted to receive a toe. Generally, the closed region 815b is arranged such as to encompass the lateral boundary of the upper and the forefoot/toe region 802c of the upper. In addition, the closed region 815b may continue from the forefoot/toe region 802c towards a medial region 804b of the upper. For example, the closed region 815b may encompass an outer and/or boundary medial region 804b of the upper 810. In other words, the closed region 815b may be arranged such as to (continuously) encompass the lateral, the forefoot, and the medial (boundary) region of the upper 810. The region 815a comprising the lattice structure is arranged at a region of the upper adapted to receive an arch. Specifically, the region 815a comprising the lattice structure is arranged at a region 802b of the upper 810 adapted to receive a midfoot. The region 815a comprising the lattice structure encompasses and/or surrounds the ankle opening 817 of the upper 810. In particular, the region 815a comprising the lattice structure extends from a lateral 804a ankle opening 817 region towards a rear 802a ankle opening 817a region and from the rear 802a ankle opening 817a region towards a medial 804b ankle opening 817 region. The ankle opening region 817 is encompassed and/or surrounded by the closed region 820.

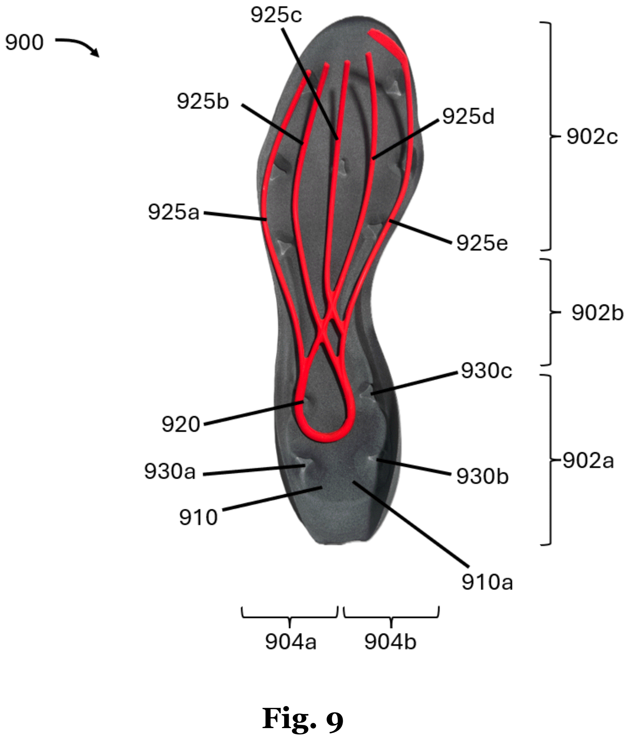

Figure 9 shows a top view of an exemplary embodiment of a part of a shoe 900. The part of the shoe 900 comprises a sole unit 910 and a stiffening element 920. The sole unit 910 may be manufactured based on a second additive manufacturing method, e.g., based on 3D printing. The sole unit 910 may be manufactured based on selective laser sintering. For example, the second additive manufacturing method, e.g., selective laser sintering, may be based on a second printing material. The second printing material may comprise a powder, e.g., a powder comprising polyamide. The sole unit 910 comprises a plurality of studs 930a, 930b, 930c (not all labelled).

The stiffening element 920 comprises a plurality of fingers 925a-925e. The plurality of fingers 925a-925e extend from a region 902b adapted to receive a midfoot towards a region 902c adapted to receive a forefoot. Specifically, the plurality of fingers 925a-925e extend towards a toe region of the sole unit 910. The finger 925a extends along a (outer) lateral portion 904a of the sole unit 910. In addition, the finger 925e extends along a (outer) medial portion 904b of the sole unit 910. The fingers 925b, 925c, 925d are arranged in a centre region of the sole unit 920, e.g., a region where the lateral region 904a transitions into the medial region 904b. The shape and the geometry of the fingers 925a, 925e essentially follows the shape of the sole unit 910. For example, a curvature of the finger 925a essentially follows the curvature of the lateral boundary of the sole unit 910. In addition, the curvature of the finger 925e essentially follows the curvature of the medial boundary of the sole unit 910.

In the embodiment illustrated in Figure 9, the stiffening element 920 is a separately manufactured stiffening element. In other words, the stiffening element 920 is not integrally manufactured with the sole unit 910. In particular, the stiffening element 920 is a separately manufactured stiffening element placed on an upper surface 910a of the sole unit 910. In some embodiments, the stiffening element 920 may be integrally manufactured with the sole unit 910. In other words, the stiffening element 920 and the sole unit 910 may be one-piece. For example, the stiffening element 920 may be manufactured based on the second additive manufacturing method. Generally, the stiffening element 920 may be integrally manufactured with the sole unit 920 such that the stiffening element 920 is arranged at the upper surface 910a of the sole unit 910. In addition, or alternatively, the stiffening element 920 may be integrally manufactured with the sole unit 910 such that at least a part of the stiffening element 920 is arranged within the sole unit 910, e.g., beneath the upper surface 910a of the sole unit 910.

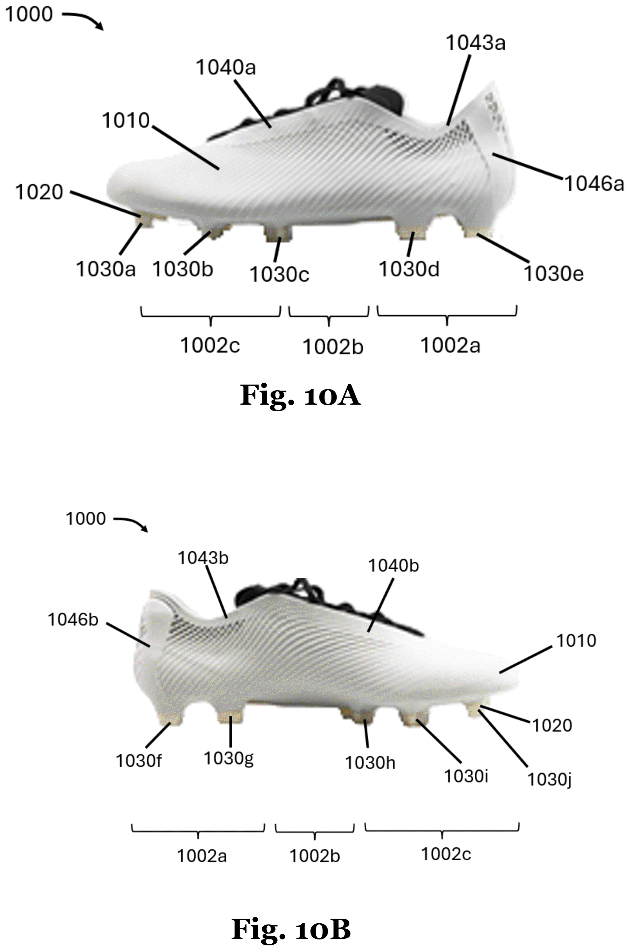

Figures 10A to 10C show a further exemplary embodiment of a shoe 1000. The shoe 1000 comprises an upper 1010 and a sole unit 1020. The upper 1010 and the sole unit 1020 are separate manufactured components. For example, the upper 1010 may be manufactured based on a first additive manufacturing method and the sole unit 1020 may be manufactured based on a second additive manufacturing method. Specifically, the first additive manufacturing method may be different from the second additive manufacturing method. The upper 1010 at least partially wraps around the sole unit 1020. For example, the upper 1010 wraps such around the sole unit 1020 that a boundary region of the sole unit 1020 is covered by the upper 1010. In particular, the upper wraps around the sole unit 1020 such that the complete boundary region, e.g., the medial and lateral boundary, is covered by the upper 1010. In other words, at least a part of the upper 1010 covers the boundary region of the sole unit 1020 such as to encircle the boundary region of the sole unit 1020.

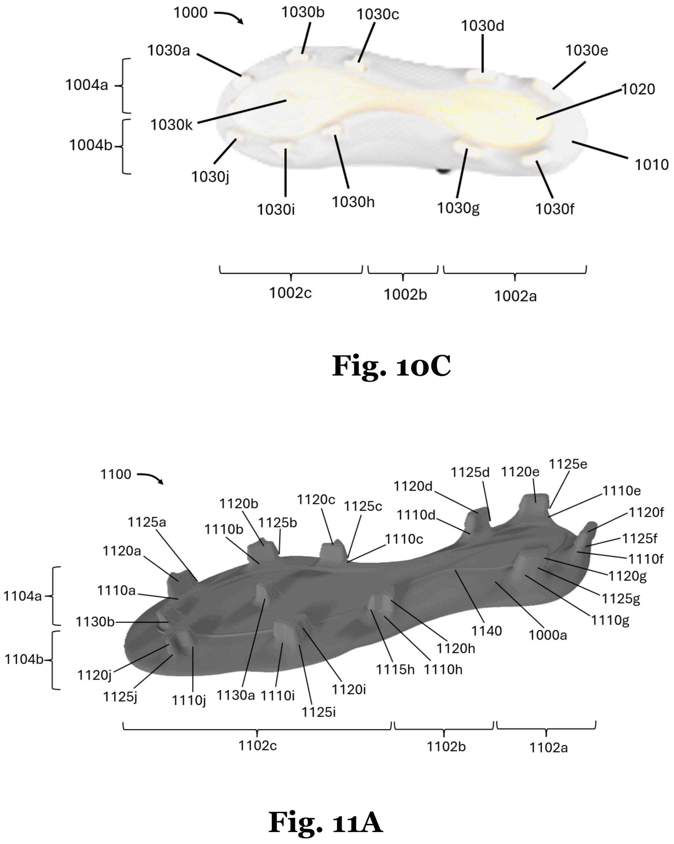

As best seen in Fig. 10C, the sole unit 1020 comprises a plurality of studs 1030a-1030k. Specifically, the studs 1030a, 1030b, 1030c, 1030h, 1030i, 1030j, 1030k are arranged at a region 1002c of the shoe 1000 adapted to receive a forefoot. For example, studs 1030a, 1030b, 1030c are arranged at a lateral 1004a side of the shoe 1000, the studs 1030h, 1030i, 1030j are arranged at a medial side 1004b of the shoe 1000, and the stud 1030k is arranged at a centre portion of the shoe 1000, e.g., a region where the lateral side 1004a transitions into the medial side 10004b. In addition, the studs 1030d, 1030e, 1030f, 1030g are arranged at a region 1002a of the shoe 1000 adapted to receive a rearfoot. Specifically, the studs 1030d, 1030e are arranged at the lateral side 1004a of the shoe 1000 and the studs 1030f, 1030g are arranged at the medial side 1004b of the shoe 1000.

The upper 1010, particularly an outer surface of the upper 1010, comprises a region comprising a lattice structure. In addition, the upper 1010 comprises closed regions 1040a, 1040b 1043a, 1043b, 1046a, 1046b. The closed regions 1040a, 1043a, 1046a are arranged at a lateral side 1004a of the shoe 1000. Specifically, the closed region 1040a is arranged at an arch region of the shoe 1000. In addition, the closed region 1043a is arranged at an ankle opening of the shoe 1000 and/or upper 1010. In addition, the closed region 1046a is arranged at a heel portion of the shoe 1000 and/or upper 1010. The closed element 1040a continues along the arch region of the upper 1010 and transitions into the closed region 1043a.

Similarly, the closed regions 1040b, 1043b, 1046b are arranged at a medial side 1004b of the shoe 1000. Specifically, the closed region 1040b is arranged at an arch region of the shoe 1000. In addition, the closed region 1043b is arranged at an ankle opening of the shoe 1000 and/or upper 1010. In addition, the closed region 1046b is arranged at a heel portion of the shoe 1000 and/or upper 1010. The closed element 1040b continues along the arch region of the upper 1010 and transitions into the closed region 1043b.

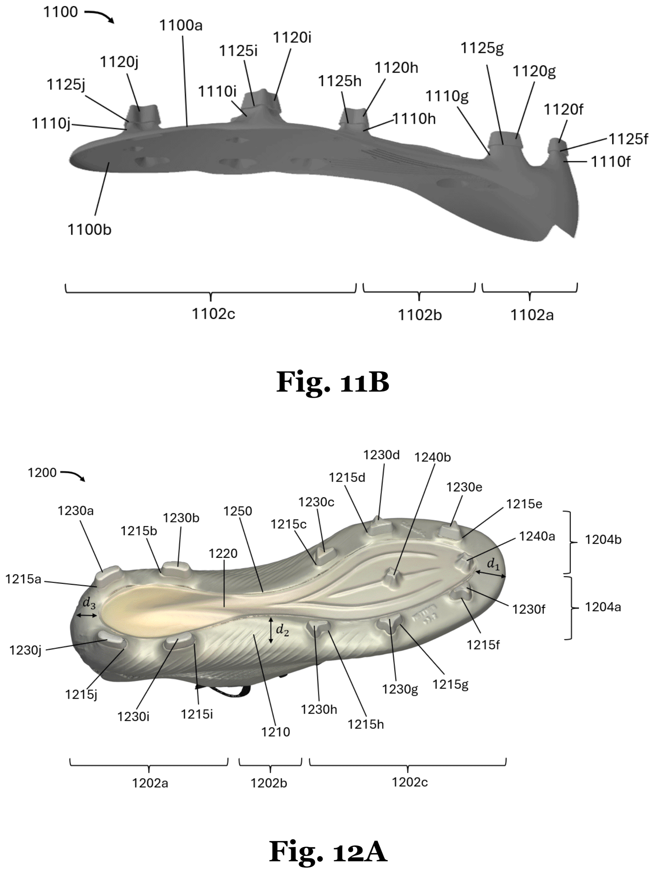

Figures 11A and 11B show an exemplary embodiment of a sole unit 1100 according to the present invention. The sole unit 1100 comprises an outer surface 1100a and an inner surface 1100b. Specifically, the sole unit 1100 comprises a plurality of stud bases 1110a-1110j, which protrude from the outer surface 1100a of the sole unit 1100. For example, the stud bases 1110a, 1110b, 1110c, 1110h, 1110i, 1110j are arranged in a region 1102c of the sole unit 1100 adapted to receive a forefoot. In addition, the stud bases 1110d, 1110e, 1110f, 1110g are arranged in a region 1102a of the sole unit 1100 adapted to receive a rearfoot. Specifically, the stud bases 1110a, 1110b, 1110c, 1110d, 1110e are arranged at a (outer) medial side 1104b of the sole unit 1100. In addition, the stud bases 1110f, 1110g, 1110h, 1110i, 1110j are arranged at a (outer) lateral side 1104a of the sole unit 1110. In addition, the sole unit 1100 comprises stud bases 1130a, 1130b, which are arranged in the region 1102c of the sole unit 1100 adapted to receive a forefoot. Specifically, the stud bases 1130a, 1130b are arranged in a centre region of the sole unit 1100, e.g., a region of the sole unit 1100 where the medial side 1104b transitions into the lateral side 1104a. The stud bases 1110a, 1110b, 1110c, 1110h, 1110i, 1110j arranged in the region 1102c adapted to receive a forefoot comprise a geometry and/or size which differs from a geometry and/or a size of the stud bases 1110d, 1110e, 1110f, 1110g arranged in the region 1102a adapted to receive a rearfoot.

Furthermore, the sole unit 1110 comprises a plurality of stud tips 1120a-1120j. Specifically, the stud tips 1120a-1120j are arranged on respective stud bases 1110a-1110j. For example, the stud tip 1120a is arranged on the stud base 1110a, the stud tip 1120b is arranged on the stud base 1110b, and the stud tip 1120c is arranged on the stud base 1110c. For example, the stud tips 1120a-1120j may be moulded on the respective stud bases 1110a-1110j. The stud tips 1120a-1120j are arranged such on the respective stud bases 1110a-1110j as to protrude from the respective stud bases 1110a-1110j.

Generally, the stud tips 1120a-1120j are arranged on the respective stud bases 1110a-1110j such as to be displaced with respect to the respective stud bases 1110a-1110j. For example, the stud tip 1120a is arranged on the stud base 1110a such as to be displaced with respect to the stud base 1110a, the stud tip 1120b is arranged on the stud base 1110b such as to be displaced with respect to the stud base 1110b, and the stud tip 1120c is arranged on the stud base 1110c such as to be displaced with respect to the stud base 1110c. Specifically, the stud tips 1120a-1120j are displaced such with respect to the respective stud bases 1110a-1110j as to form/create a respective offset 1125a-1125j. For example, the stud tip 1120a and the stud base 1110a form/create the offset 1125a, the stud tip 1120b and the stud base 1110b form/create the offset 1125b, and the stud tip 1120c and the stud base 1110c form/create the offset 1125c. The respective offset 1125a-1125j is formed/created by a respective stud tip 1120a-1120j whose width is larger than a width associated with the respective stud base 1110a-1110j. Generally, the displacements/offsets 1125a-1125j between the stud bases 1110a-1110j and the stud tips 1120a-1120j contribute to a smooth transition between the sole unit 1110 and an upper when the sole unit 1110 is arranged in a shoe/upper. A smoother transition between the sole unit 1110 and the upper improves the functionality of a shoe comprising the sole unit 1110.

The sole unit 1110 further comprises a rim 1140. The rim 1140 is arranged at the outer surface 1100a of the sole unit 1100. Specifically, the rim 1140 protrudes from the outer surface 1100a of the sole unit 1100. The rim 1140 encircles the outer surface 1100a of the sole unit 1100 such as to form a raised ring. For example, the rim 1140 is arranged such as to separate the stud bases 1130a, 1130b from the stud bases 1110a-1110j. Specifically, the rim 1140 continues such at the outer surface 1110a of the sole unit 1100 as to adjoin an inner side of the stud bases 1110a-1110j and an outer side of the stud base 113ob. In other words, the rim 1140, specifically the raised ring, is confined by the stud bases 1110a-1110j. A geometry and/or shape of the rim 1140, specifically the raised ring, essentially follows a geometry and/or shape of the sole unit 1100. Generally, the rim 1140 enables an improved alignment of the sole unit 1100 and an upper.

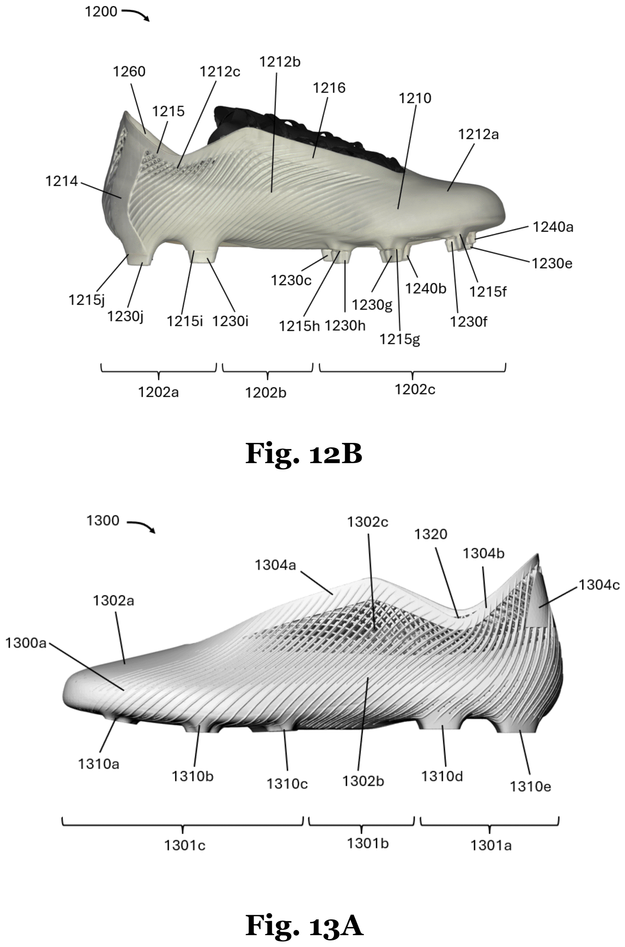

Figures 12A and 12B show an exemplary embodiment of a shoe 1200 according to the present invention. The shoe 1200 comprises an upper 1210 and a sole unit 1220. The sole unit 1220 comprises a plurality of stud domes (not visible) and a plurality of stud tips 1230a-1230j. Specifically, the stud tips 1230a-1230j are arranged on respective stud bases, e.g., moulded on the respective stud bases. Generally, the stud tips 1230a-1230j may be arranged such on the respective stud bases as to form/create an offset (see e.g., Fig. 11A and 11B). The stud tips 1230a, 1230b, 1230i, 1230j are arranged in a region 1202a of the sole unit 12220 adapted to receive a rearfoot. For example, the stud tips 1230a, 1230b are arranged at a (outer) medial side 1204b of the sole unit 1220. In addition, the stud tips 1230i, 1230j are arranged at a (outer) lateral side 1204a of the sole unit 1200. The stud tips 1230c-1230h are arranged at a region 1202c adapted to receive a forefoot. Specifically, the stud tips 1230c,1230d, 1230d are arranged at a (outer) medial side 1204b of the sole unit 1220 and the stud tips 1230f, 1230g are arranged at a (outer) lateral side 1204a of the sole unit 1220. The studs 1240a, 1240b are arranged at a centre region of the sole unit 1220, e.g., a region of the sole unit 1200 where the medial side 1204b transitions into the lateral side 1204a. The sole unit 1220 further comprises a rim 1250. The rim 1250 is arranged at an outer surface of the sole unit 1220. Specifically, the rim 1250 encircles the outer surface of the sole unit 1220. The rim 1250 continues on the outer surface such as to form a raised ring.

The upper 1210 covers a part of a lower surface of the sole unit 1220. Specifically, the upper 1210 covers the part of the sole unit 1220 such that the upper 1210 wraps around the part of the lower surface of the sole unit 1220. Specifically, the upper 1210 wraps around an outer region of the sole unit 1220. For example, the upper wraps around a (outer) region of the sole unit 1220 which is confined and/or bounded by the rim 1250 of the sole unit 1220. In particular, an end portion and/or a boundary of the upper 1210 adjoints the rim 1250 of the sole unit 1220. Generally, a width associated with the part of the sole unit 1220 which is covered by the upper 1210, e.g., the part of the upper 1210 that wraps around the sole unit 1220, varies along the shoe 1200. For example, a width associated with the part of the sole unit 1220 which is covered by the upper 1210 is *d*₁ in a region 1202c of the sole unit 1220 adapted to receive a forefoot. In addition, a width associated with the part of the sole unit 1220 which is covered by the upper 1210 is *d*₂ in a region 1202b of the sole unit 1220 adapted to receive a midfoot. In addition, a width associated with the part of the sole unit 1220 which is covered by the upper 1210 is *d*₃ in a region 1202a of the sole unit 1220 adapted to receive a rearfoot.

The upper 1210 comprises a plurality of apertures 1215a-1215j. The apertures 1215a, 1215b, 1215i, 1215j are arranged in a region 1202a of the upper 1210 adapted to receive a rearfoot. For example, the apertures 1215a, 1215b are arranged at a (outer) medial side 1204b of the upper 1210 and the apertures 1215i, 1215j are arranged at a (outer) lateral side 1204a of the upper 1210. In addition, the apertures 1215c-1215h are arranged at a region 1202c of the upper 1210 adapted to receive a forefoot. For example, the apertures 1215c, 1215d, 1215e are arranged at a (outer) medial side 1204b of the upper 1210 and the apertures 1215f, 1215g, 1215h are arranged at a (outer) lateral side 1204a of the upper 1210. The plurality of stud tips 1230a-1230j protrude through respective apertures 1215a-1215j of the upper 1210. For example, the stud tip 1230a protrudes through the aperture 1215a, the stud tip 1230b protrudes through the aperture 1215b, and the stud tip 1230c protrudes through the aperture 1215c.

The upper 1210, particularly an outer surface of the upper 1210, comprises a closed region 1212a, a closed structured region 1212b, and a region 1212c comprising a beam-based lattice structure as depicted in Fig. 12B. Specifically, the closed region 1212a is arranged in a region 1202c of the upper 1210 adapted to receive a forefoot, particularly toes. The closed structured region 1212b is arranged in a region 1202b of the upper 1210 adapted to receive a midfoot. For example, the closed region 1212a transitions into the closed structured region 1212b, e.g., along a direction pointing from the region 1202c towards the region 1202b. For example, the closed structured region 1212b comprises a plurality of beams, e.g., beams that continue on a closed surface of the upper 1210. The region 1212c comprising the beam-based lattice structure is arranged in a region 1202a of the upper 1210 adapted to receive a rearfoot. Specifically, the region 1212c comprising the beam-based lattice structure is arranged at an ankle region of the upper, e.g., below an ankle opening 1260 of the upper 1210 and/or shoe 1200. In addition, the upper comprises continuous segments 1214, 1215 and 1216. The continuous segment 1215 is arranged at the ankle opening 1260 of the upper 1210. Specifically, the continuous segment 1215 encircles the ankle opening 1260 of the upper 1210. The continuous segment 1215 transitions into the continuous segment 1216. The continuous segment 1216 is arranged at a region of the upper 1210 adapted to receive an arch. The continuous segment 1216 transitions into the closed region 1212a of the upper 1210. In addition, the continuous segment 1214 continuous from the ankle opening 1260 of the upper towards a bottom/ground portion of the upper 1210 and/or shoe 1200. Specifically, the continuous segment 1214 continuous from the continuous segment 1215 towards the stud tip 1230j of the sole plate 1220 and/or to the aperture 1215j of the upper 1210.

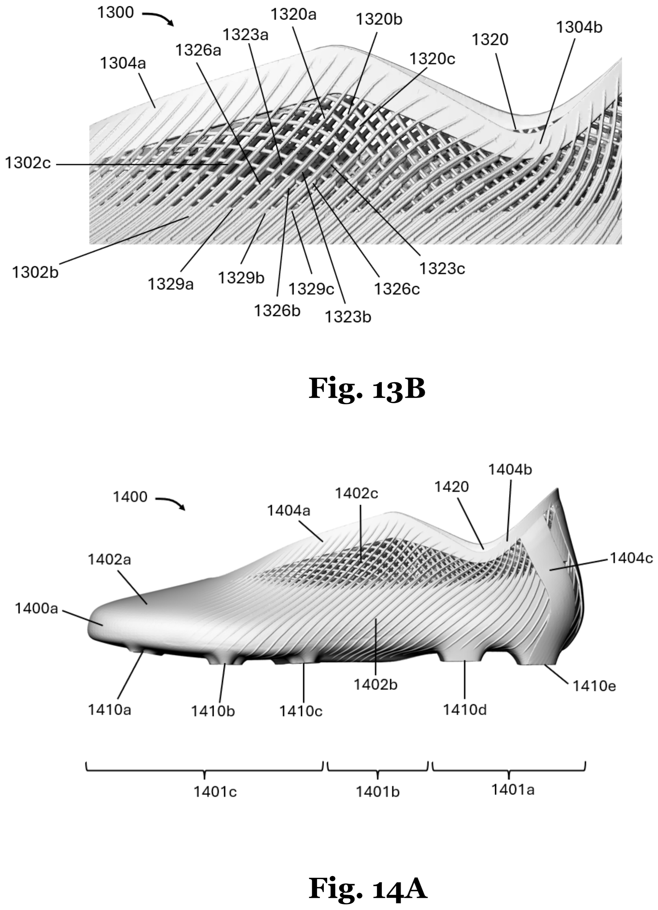

Figures 13A and 13B show an exemplary embodiment of an upper 1300 according to the present invention. The upper 1300 comprises an outer surface 1300a. In addition, the upper 1300 comprises a plurality of apertures 1310a-1310e. The apertures 1310a, 1310b, 1310c are arranged in a region 1301c of the upper 1300 adapted to receive a forefoot. In addition, the apertures 1310d, 1310e are arranged in a region 1301a of the upper 1300 adapted to receive a rearfoot. The apertures 1310a-1310e are arranged at a (outer) lateral side of the upper 1300. In some embodiments, the upper 1300 may also comprise apertures on a (outer) medial side of the upper 1300. For example, the number of apertures on the (outer) medial side of the upper 1300 may coincide with the number of apertures 1310a-1310e on the (outer) lateral side of the upper 1300.

The upper 1300, particularly the outer surface 1300a of the upper 1300, comprises a closed region 1302a, a closed structured region 1302b, and a region 1302c comprising a beam-based lattice structure. The closed region 1302a is arranged in a region 1301c of the upper 1300 adapted to receive a forefoot. In particular, the closed region 1302a is arranged at a top side of the upper 1300. The closed structured region 1302b is arranged at the region 1301a adapted to receive a rearfoot, the region 1301b adapted to receive a midfoot and the region 1301c adapted to receive a forefoot. Specifically, the closed structured region 1302b encompasses the upper 1300, e.g., a lateral and/or medial side surface of the upper 1300. At the top side of the portion 1301c of the upper 1300 adapted to receive a forefoot the closed structured region 1302b transitions into the closed region 1302a.

The region 1302c comprising the beam-based lattice structure is arranged in a region 1301b of the upper 1300 adapted to receive a midfoot and in a region 1301a of the upper 1300 adapted to receive a rearfoot. Specifically, the region 1302c comprising the beam-based lattice structure is arranged at a medial and/or a lateral side surface of the upper 1300. The region 1302c comprising the beam-based lattice structure comprises a plurality of beams. A first part 1320a, 1320b, 1320c (not all labelled) of each beam of the plurality of beams originates at a continuous segment 1304a of the upper 1300. Each of the first parts 1320a, 1320b, 1320c of the respective beams broadens as the first parts 1320a, 1320b, 1320c of the beams continue towards the closed structured region 1302b. Specifically, the first parts 1320a, 1320b, 1320c of the respective beams broadens based on stacking and/or layering. For example, the first part 1320a of a beam is stacked and/or layered with the part/beam 1323a, the first part 1320b of a beam is stacked and/or layered with the part/beam 1323b, and the first part 1320c of a beam is stacked and/or layered with the part/beam 1323c. Generally, a width associated with the part 1323a is larger than a width associated with the part 1320a, a width associated with the part 1323b is larger than a width associated with the part 1320b, and a width associated with the part 1323c is larger than a width associated with the part 1320c. In addition, the part 1323a of a beam is stacked and/or layered with the part/beam 1326a, the part 1323b of a beam is stacked and/or layered with the part/beam 1326b, and the part 1323c of a beam is stacked and/or layered with the part/beam 1326c. Generally, a width associated with the part 1326a is larger than a width associated with the part 1323a, a width associated with the part 1326b is larger than a width associated with the part 1323b, and a width associated with the part 1326c is larger than a width associated with the part 1323c. Moreover, the part 1326a of a beam is stacked and/or layered with the part/beam 1329a, the part 1326b of a beam is stacked and/or layered with the part/beam 1329b, and the part 1326c of a beam is stacked and/or layered with the part/beam 1329c. Generally, a width associated with the part 1329a is larger than a width associated with the part 1326a, a width associated with the part 1329b is larger than a width associated with the part 1326b, and a width associated with the part 1329c is larger than a width associated with the part 1326c.

Specifically, the width associated with the parts 1329a, 1329b, 1329c is sufficiently large such that the parts 1329a, 1329b, 1329c contact each other. For example, the part 1329a contacts the part 1329b and the part 1329b contacts the part 1329c. In particular, the parts 1329a, 1329b, 1329c contact each other such as to form/create the closed structured region 1302b. In other words, the parts 1320a, 1323a, 1326a and 1329a, the parts 1320b, 1323b, 1326b and 1329b, and the parts 1320c, 1323c, 1326c, and 1329c are arranged such as to from/create a seamless transition from the region 1302c comprising the beam-based lattice structure towards the closed structured region 1302b, e.g., the width of the beams increases stepwise, e.g., based on stacked/layers beams, such that the beams, particularly the parts 1329a, 1329b, 1329c, merge into each other such as to form/create the structured closed region 1302b.

In addition, the upper 1300 comprises continuous segments 1304a, 1304b and 1304c. The continuous segment 1304a is arranged at a region of the upper 1300 adapted to receive an arch, e.g., at an arch region of the upper 1300. The continuous segment 1304b is arranged at an ankle opening 1320 of the upper 1300. Specifically, the continuous segment 1304b encompasses the ankle opening 1320 of the upper 1300. The continuous segment 1304a transitions into the continuous segment 1304b. The continuous segment 1304a and the continuous segment 1304b bound the region 1302c comprising the beam-based lattice structure. In addition, the continuous segment 1304c is arranged at a region of the upper 1300 adapted to receive a heel. The continuous segment 1304c is arranged within the region 1302c comprising the beam-based lattice structure, e.g., the continuous segment 1304c is arranged on the beam-based lattice structure.

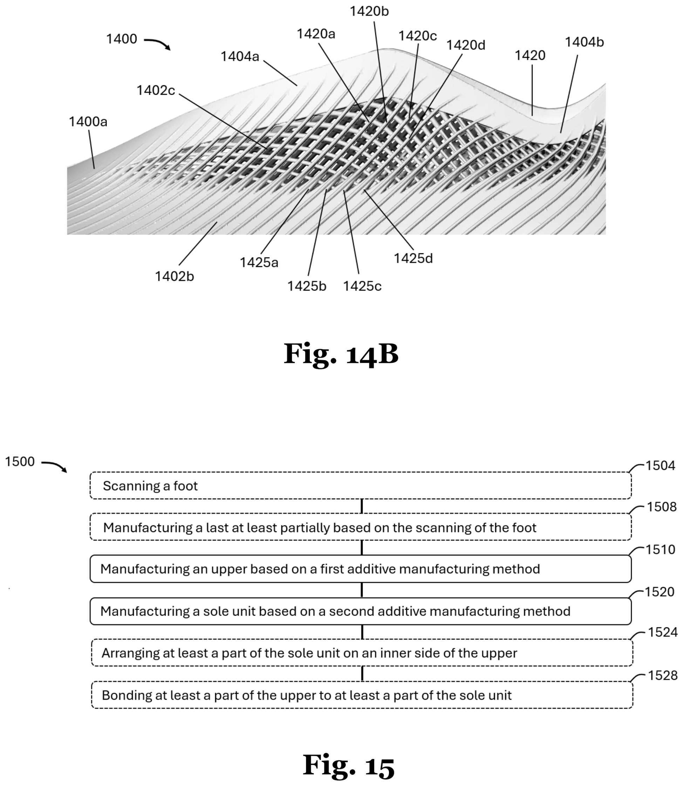

Figures 14A and 14B show an exemplary embodiment of an upper 1400 according to the present invention. The upper 1400 comprises an outer surface 1400a. In addition, the upper 1400 comprises a plurality of apertures 1410a-1410e. The apertures 1410a, 1410b, 1410c are arranged in a region 1401c of the upper 1400 adapted to receive a forefoot. In addition, the apertures 1410d, 1410e are arranged in a region 1401a of the upper 1400 adapted to receive a rearfoot. The apertures 1410a-1410e are arranged at a (outer) lateral side of the upper 1400. In some embodiments, the upper 1400 may also comprise apertures on a (outer) medial side of the upper 1400. For example, the number of apertures on the (outer) medial side of the upper 1400 may coincide with the number of apertures 1410a-1410e on the (outer) lateral side of the upper 1400.

The upper 1400, particularly the outer surface 1400a of the upper 1400, comprises a closed region 1402a, a closed structured region 1402b, and a region 1402c comprising a beam-based lattice structure. The closed region 1402a is arranged in a region 1401c of the upper 1400 adapted to receive a forefoot. In particular, the closed region 1402a is arranged at a top side of the upper 1400. The closed structured region 1402b is arranged at the region 1401a adapted to receive a rearfoot, the region 1401b adapted to receive a midfoot and the region 1401c adapted to receive a forefoot. Specifically, the closed structured region 1402b encompasses the upper 1400, e.g., a lateral and/or medial side surface of the upper 1400. At the top side of the portion 1402 of the upper 1400 adapted to receive a forefoot the closed structured region 1402b transitions into the closed region 1402a.

The region 1402c comprising the beam-based lattice structure comprises a plurality of beams 1420a, 1420b, 1420c (not all labelled). For example, the beams 1420a, 1420b, 1420c originate at a continuous segment 1404a and/or at the continuous segment 1404b. The beams 1420a, 1420b, 1420c continue from the continuous segment 1404c towards the closed structured region 1402b. Specifically, before the beams 1420a, 1420b, 1420c reach the closed structured region 1402b a width associated with the beams 1420a, 1420b, 1420c increases. In particular, the width of the beams 1420a, 1420b, 1420c increases such as to form/create the broadened parts 1425a, 1425b, 1425c. For example, the width of the beam 1420a increases such as to form the broadened part 1425a, the width of the beam 1420b increases such as to form the broadened part 1425b, and the width of the beam 1420c increases such as to form the broadened part 1425c. For example, the broadened parts 1425a, 1425b, 1425c comprise a triangle geometry, e.g., such hat the triangle broadens towards the closed structured region 1402b. The broadened parts 1425a, 1425b, 1425c broaden such that the parts 1425a, 1425b, 1425c merge into each other, e.g., merge into each other such as to form/create the closed structured region 1402b.

Figure 15 shows a schematic illustration of an exemplary embodiment of a method 1500 for manufacturing a shoe. The method 1500 comprises the step of manufacturing 1510 an upper based on a first additive manufacturing method. For example, manufacturing 1510 the upper may be based on stereolithography. In addition, manufacturing 1510 the upper may be based on a first printing material, e.g., resin. In addition, manufacturing 1510 the upper may comprise manufacturing the upper such that the upper comprises at least one aperture. For example, the aperture may be manufactured such as to be adapted to receive at least one stud.

In addition, the method 1500 comprises the step of manufacturing 1520 a sole unit based on a second additive manufacturing method. For example, manufacturing 1520 the sole unit may be based on selective laser sintering. In addition, manufacturing 1520 the sole unit may be based on a second printing material, e.g., a powder. In addition, manufacturing 1520 the sole unit may comprise manufacturing the sole unit such that the sole unit comprises at least one stud. In general, the second additive manufacturing method may be different from the first additive manufacturing method. In other words, manufacturing 1510 the upper may be based on a different manufacturing method than manufacturing 1520 the sole unit.

In addition, the method 1500 may comprise the step of scanning 1504 a foot. For example, scanning 1504 the foot may comprise scanning the foot of an athlete adapted to wear the shoe manufactured according to the method 1500. For example, scanning 1504 the foot may comprise 3D scanning the foot.

In addition, or alternatively, the method 1500 may comprise the step of manufacturing 1508 a last at least partially based on the scanning 1504 of the foot. For example, manufacturing 1508 the last may comprise manufacturing a virtual and/or digital last. For example, the virtual and/or digital last may comprise a CAD model of the virtual and/or digital last. In addition, manufacturing 1508 the last may comprise manufacturing a physical last, e.g., a physical last based on the virtual and/or digital last.

In addition, or alternatively, the method 1500 may comprise the step of arranging 1524 at least a part of the sole unit on an inner side of the upper. For example, arranging 1524 at least a part of the sole unit on an inner side of the upper may comprise inserting the at least part of the sole unit into the upper. Specifically, inserting the at least part of the sole unit into the upper may comprise arranging the sole unit within the upper. In addition, or alternatively, arranging 1524 the at least part of the sole unit on an inner side of the upper may comprise aligning the at least part of the sole unit with the inner side of the upper. For example, the at least part of the sole unit may be aligned with the inner side of the upper such that the at least one stud of the sole unit protrudes from the at least one aperture of the upper.

In addition, or alternatively, the method 1500 may comprise the step of bonding 1528 at least a part of the upper to at least a part of the sole unit. For example, bonding 1528 at least a part of the upper to at least a part of the sole unit may comprise bonding at least a part of the upper to at least a part of the sole unit.

### Further Embodiments:

### Embodiment 1.

A shoe, preferably a football shoe, comprising an upper and a sole unit, wherein:
the upper is manufactured based on a first additive manufacturing method;
the sole unit is manufactured based on a second additive manufacturing method; and
the second additive manufacturing method is different from the first additive manufacturing method.

### Embodiment 2.

The shoe according to Embodiment 1, wherein the upper and the sole unit are manufactured separately.

### Embodiment 3.

The shoe according to Embodiment 1 or 2, wherein the first additive manufacturing method comprises stereolithography; and/or the second additive manufacturing method comprises selective laser sintering.

### Embodiment 4.

The shoe according to one of the Embodiments 1 to 3, wherein:
the first additive manufacturing method is based on a first printing material comprising resin; and/or
the second additive manufacturing method is based on a second printing material comprising a powder; preferably wherein the powder comprises polyamide.

### Embodiment 5.

The shoe according to Embodiment 4, wherein the resin comprises:
moisture cured urethane; and/or
expanded elastomeric polyurethane.

### Embodiment 6.

The shoe according to one of the Embodiments 1 to 5, wherein the upper covers at least a part of a lower surface of the sole unit.

### Embodiment 7.

The shoe according to Embodiment 6, wherein the upper covers the at least part of the lower surface of the sole unit such that the upper wraps around the at least part of the lower surface of the sole unit.

### Embodiment 8.

The shoe according to Embodiment 6 or 7, wherein the upper covers at least 50%, preferably at least 60%, more preferably at least 70%, most preferably at least 80% of the lower surface of the sole unit.

### Embodiment 9.

The shoe according to one of the Embodiments 1 to 8, wherein the upper is adapted to receive at least a part of the sole unit; preferably wherein the at least part of the sole unit is inserted into the upper.

### Embodiment 10.

The shoe according to one of the Embodiments 1 to 9, wherein at least a part of the upper and at least a part of the sole unit are bonded.

### Embodiment 11.

The shoe according to Embodiment 10, wherein the at least part of the sole unit is bonding to the at least part of the upper; preferably wherein the at least part of the sole unit is bonding to an inner surface of the upper.

### Embodiment 12.

The shoe according to one of the Embodiments 1 to 11, wherein the upper comprises at least one aperture and the sole unit comprises at least one stud.

### Embodiment 13.

The shoe according to Embodiment 12, wherein the at least one stud protrudes from the at least one aperture of the upper; preferably wherein the at least one stud protrudes from the at least one aperture such as to at least partially form a ground-engaging element of the shoe.

### Embodiment 14.

The shoe according to Embodiment 12 or 13, wherein:
a geometry of the at least one aperture is based on a geometry of the at least one stud; and/or
a size of the at least one aperture is based on a size of the at least one stud; and/or
a number of the at least one aperture is based on a number of the at least one stud; and/or
a location of the at least one aperture is based on a location of the at least one stud.

### Embodiment 15.

The shoe according to one of the Embodiments 12 to 14, wherein:
the sole unit comprises at least 2 studs, preferably at least 4 studs, more preferably at least 6 studs, even more preferably at least 8 studs, most preferably at least 10 studs; and/or
the sole unit comprises at most 30 studs, preferably at most 26 studs, more preferably at most 22 studs, even more preferably at most 18 studs, most preferably at most 14 studs.

### Embodiment 16.

The shoe according to one of the Embodiments 12 to 15, wherein:
the at least one stud is arranged in a region of the sole unit adapted to receive a forefoot and/or a rearfoot; and/or
the at least one stud is arranged in a lateral and/or medial region of the sole unit; preferably wherein at least one stud is arranged in an outer lateral and/or an outer medial region.

### Embodiment 17.

The shoe according to one of the Embodiments 12 to 16, wherein the at least one stud comprises a coating; preferably a coating based on polyurethane and/or thermoplastic polyurethane.

### Embodiment 18.

The shoe according to one of the Embodiments 1 to 17, wherein the shoe comprises a tongue.

### Embodiment 19.

The shoe according to Embodiment 18, wherein:
the tongue is attached to the upper of the shoe; preferably wherein the tongue comprises a separately manufactured tongue; and/or
the tongue comprises a tongue which is integrally manufactured with the upper of the shoe; preferably wherein the tongue is manufactured based on the first additive manufacturing method.

### Embodiment 20.

The shoe according to one of the Embodiments 1 to 19, wherein a thickness of the sole unit:
is at least 0.3 mm, preferably at least 0.6 mm, more preferably at least 0.9 mm, even more preferably at least 1.2 mm, most preferably at least 1.5 mm; and/or
is at most 4 mm, preferably at most 3.5 mm, more preferably at most 3 mm, even more preferably at most 2.5 mm, most preferably at most 2 mm.

### Embodiment 21.

The shoe according to one of the Embodiments 1 to 20, wherein the sole unit comprises at least one stiffening element; preferably wherein the at least one stiffening element is integrally manufactured with the sole unit.

### Embodiment 22.

The shoe according to one of the Embodiments 1 to 21, wherein the upper comprises at least one cushioning element integrated at an inner surface of the upper.

### Embodiment 23.

The shoe according to Embodiment 22, wherein:
the at least one cushioning element comprises an integrally printed lattice structure; and/or
the at least one cushioning element is arranged in a region of the upper adapted to receive a heel.

### Embodiment 24.

The shoe according to one of the Embodiments 1 to 23, wherein at least one part of an outer surface of the upper comprises a lattice structure.

### Embodiment 25.

The shoe according to Embodiment 24, wherein the at least one part of the outer surface is arranged at an instep area of the upper and/or shoe.

### Embodiment 26.

Method for manufacturing a shoe, preferably a sports shoe, comprising:
manufacturing an upper based on a first additive manufacturing method;
manufacturing a sole unit based on a second additive manufacturing method;
wherein the second additive manufacturing method is different from the second additive manufacturing method.

### Embodiment 27.

The method for manufacturing a shoe according to Embodiment 26, wherein:
the first additive manufacturing method comprises stereolithography; and/or
the second additive manufacturing method comprises selective laser sintering.

### Embodiment 28.

The method for manufacturing a shoe according to Embodiment 26 or 27, further comprising arranging at least a part of the sole unit on an inner side of the upper; preferably such that the upper wraps around the at least part of the sole unit.

### Embodiment 29.

The method for manufacturing a shoe according to one of the Embodiments 26 to 28, further comprising bonding at least a part of the upper to at least a part of the sole unit; preferably wherein bonding the at least part of the upper to the at least part of the sole unit comprises bonding the at least part of the upper to the at least part of the sole unit.

### Embodiment 30.

The method for manufacturing a shoe according to one of the Embodiments 26 to 29 further comprising scanning a foot.

### Embodiment 31.

The method for manufacturing a shoe according to Embodiment 30, further comprising manufacturing a last at least partially based on the scanning of the foot; preferably manufacturing the last comprises generating a virtual and/or digital last at least partially based on the scanning of the foot.

## Claims

1. A shoe, preferably a football shoe, comprising an upper and a sole unit, wherein:
the upper is manufactured based on a first additive manufacturing method;
the sole unit is manufactured based on a second additive manufacturing method; and
the second additive manufacturing method is different from the first additive manufacturing method.

2. The shoe according to claim 1, wherein:
the upper and the sole unit are manufactured separately; and/or the first additive manufacturing method comprises stereolithography; and/or
the second additive manufacturing method comprises selective laser sintering.

3. The shoe according to claim 1 or 2, wherein:
the first additive manufacturing method is based on a first printing material comprising resin; and/or
the second additive manufacturing method is based on a second printing material comprising a powder; preferably wherein the powder comprises polyamide; most preferably wherein the resin comprises moisture cured urethane and/or expanded elastomeric polyurethane.

4. The shoe according to one of the claims 1 to 3, wherein the upper covers at least a part of a lower surface of the sole unit; preferably wherein the upper covers the at least part of the lower surface of the sole unit such that the upper wraps around the at least part of the lower surface of the sole unit.

5. The shoe according to one of the claims 1 to 4, wherein:
the upper is adapted to receive at least a part of the sole unit; preferably wherein the at least part of the sole unit is inserted into the upper; and/or
at least a part of the upper and at least a part of the sole unit are bonded; preferably wherein the at least part of the sole unit is bonded to the at least part of the upper; most preferably wherein the at least part of the sole unit is bonded to an inner surface of the upper.

6. The shoe according to one of the claims 1 to 5, wherein the upper comprises at least one aperture and the sole unit comprises at least one stud; preferably wherein the at least one stud protrudes from the at least one aperture of the upper; most preferably wherein the at least one stud protrudes from the at least one aperture such as to at least partially form a ground-engaging element of the shoe.

7. The shoe according to claim 6, wherein:
a geometry of the at least one aperture is based on a geometry of the at least one stud; and/or
a size of the at least one aperture is based on a size of the at least one stud; and/or
a number of the at least one aperture is based on a number of the at least one stud; and/or
a location of the at least one aperture is based on a location of the at least one stud.

8. The shoe according to claim 6 or 7, wherein:
the sole unit comprises at least 2 studs, preferably at least 4 studs,
more preferably at least 6 studs, even more preferably at least 8 studs, most preferably at least 10 studs; and/or
the sole unit comprises at most 30 studs, preferably at most 26 studs, more preferably at most 22 studs, even more preferably at most 18 studs, most preferably at most 14 studs.

9. The shoe according to one of the claims 6 to 8, wherein:
the at least one stud is arranged in a region of the sole unit adapted to receive a forefoot and/or a rearfoot; and/or
the at least one stud is arranged in a lateral and/or medial region of the sole unit; preferably wherein at least one stud is arranged in an outer lateral and/or an outer medial region; and/or
the at least one stud comprises a coating; preferably a coating based on polyurethane and/or thermoplastic polyurethane.

10. The shoe according to one of the claims 1 to 9, wherein a thickness of the sole unit:
is at least 0.3 mm, preferably at least 0.6 mm, more preferably at least 0.9 mm, even more preferably at least 1.2 mm, most preferably at least 1.5 mm; and/or
is at most 4 mm, preferably at most 3.5 mm, more preferably at most 3 mm, even more preferably at most 2.5 mm, most preferably at most 2 mm.

11. The shoe according to one of the claims 1 to 10, wherein:
the sole unit comprises at least one stiffening element; preferably wherein the at least one stiffening element is integrally manufactured with the sole unit; and/or
at least one part of an outer surface of the upper comprises a lattice structure; preferably wherein the at least one part of the outer surface is arranged at an instep area of the upper and/or shoe.

12. The shoe according to one of the claims 1 to 11, wherein the upper comprises at least one cushioning element integrated at an inner surface of the upper; preferably wherein:
the at least one cushioning element comprises an integrally printed lattice structure; and/or
the at least one cushioning element is arranged in a region of the upper adapted to receive a heel.

13. Method for manufacturing a shoe, preferably a sports shoe, comprising:
manufacturing an upper based on a first additive manufacturing method;
manufacturing a sole unit based on a second additive manufacturing method;
wherein the second additive manufacturing method is different from the second additive manufacturing method.

14. The method for manufacturing a shoe according to claim 13, wherein:
the first additive manufacturing method comprises stereolithography; and/or
the second additive manufacturing method comprises selective laser sintering; and/or
further comprising arranging at least a part of the sole unit on an inner side of the upper; preferably such that the upper wraps around the at least part of the sole unit.

15. The method for manufacturing a shoe according to claim 13 or 14, further comprising:
bonding at least a part of the upper to at least a part of the sole unit; preferably wherein bonding the at least part of the upper to the at least part of the sole unit comprises bonding the at least part of the upper to the at least part of the sole unit; and/or
scanning a foot; preferably further comprising manufacturing a last at least partially based on the scanning of the foot; most preferably manufacturing the last comprises generating a virtual and/or digital last at least partially based on the scanning of the foot.
